(19) Europäisches Patentamt
European Patent Office
Office européen des brevets

(11) **EP 4 145 385 A1**

(12) **EUROPEAN PATENT APPLICATION**

(43) Date of publication:
**08.03.2023 Bulletin 2023/10**

(21) Application number: **21194437.6**

(22) Date of filing: **01.09.2021**

(51) International Patent Classification (IPC):
**G06T 7/00** (2006.01)     **G06V 20/69** (2022.01)

(52) Cooperative Patent Classification (CPC):
**G06T 7/0012; G06V 20/698;** G06T 2207/10056;
G06T 2207/20081; G06T 2207/20084;
G06T 2207/30024

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **Sartorius Stedim Data Analytics AB**
  **903 33 Umeå (SE)**
• **Academisch Ziekenhuis Leiden**
  **2333 ZA Leiden (NL)**

(72) Inventors:
• **SJÖGREN, Rickard**
  **903 33 Umea (SE)**

• **PAULSSON, Elsa Sörman**
  **903 33 Umea (SE)**
• **WALES, Richard**
  **Royston, SG8 5WY (GB)**
• **BARNES, Kalpana**
  **Newark, SG8 5HL (GB)**
• **VAN MEER, Berend**
  **2333 ZA Leiden (NL)**
• **BRESCIA, Marcella Dias**
  **2333 ZA Leiden (NL)**
• **MUMMERY, Christine**
  **2333 ZA Leiden (NL)**

(74) Representative: **Mewburn Ellis LLP**
**Aurora Building**
**Counterslip**
**Bristol BS1 6BX (GB)**

(54) **MONITORING OF CELL CULTURES**

(57)     Methods and systems for monitoring a cell population in culture are described. The method include the steps of: obtaining one or more images of the cell population acquired using label-free imaging during the cell culture process, processing the one or more images to obtain one or more label-free image-derived features, and predicting one or more metrics indicative of a cell state transition in the cell population using a statistical model that takes the label-free image-derived features as inputs and provides the one or more metrics indicative of a cell state transition in the cell population as output. The metrics indicative of a cell state transition in the cell population are metrics that characterise the progress and/or outcome of a cell state transition process occurring in a cell population, and the inputs of the statistical model do not include any feature obtained using an invasive or destructive measurement process.

Fig. 1

EP 4 145 385 A1

## Description

<u>Field of the Present Disclosure</u>

The present disclosure relates to methods for monitoring cell cultures, and in particular to monitor cell state transition processes occurring in a cell population in cell culture, using machine learning and non-invasive label-free imaging data. Related methods, systems and products are described.

<u>Background</u>

Much progress has been made in recent years in identifying experimental conditions necessary to replicate a variety of cell state transitions *in vitro.* A particularly promising aspect of this is the ability to obtain a variety of differentiated cells *in vitro* from pluripotent cells (a process called "directed differentiation") or from differentiated cells (a process called "direct reprogramming"). This underlines enormous potential for cell therapy, tissue engineering, the study of disease, as well as drug development (e.g. screening) and testing (e.g. safety pharmacology). A particularly promising aspect of this is the use of induced pluripotent stem cells (iPSC), which are themselves generated *in vitro* from somatic cells through a guided cell state transition process. Indeed, this opens the door to the generation of more relevant models of genetic diseases, to the generation of tailored cell therapies and tissues from patients, etc. However, differentiation of induced pluripotent stem cells into different cell types of interest is a complicated procedure. The process requires days to weeks of experimentation, with multiple additions of different types of growth factors at different times on the way. iPSC lines derived from different individuals may perform differently in identical differentiation processes due to the different genetic backgrounds or histories of the individuals from which they are derived. Adding on this, much of the underlying biology is still poorly understood and experimental procedures are often the result of long and hard trial-and-error. A consequence of these complexities is that quality control and assurance of stem cell differentiation is notoriously difficult. This is further complicated by a lack of appropriate tools to monitor, understand and control the iPSC differentiation process.

A variety of fluorescent labels and markers have been used for this purpose in experimental settings. However, even in experimental settings, label-based approaches have proved to be limited as many cell state transition processes do not have appropriate markers. Further, where the labelling and/or analysis of the sample requires manipulation (or often destruction) of the cell population, the labelling can only provide information about the outcome of the culture and cannot provide any information that can be used to guide the cell state transition process. Even where a marker exists and the presence of labels is compatible with the viability of the cells (e.g. when using genetically modified cell lines that expressed fluorescently tagged markers), thereby making live monitoring of the cultures possible, the presence and/or the monitoring of the presence of the marker can affect the cell state transition process (e.g. by affecting the function of the tagged protein, by photobleaching, etc.). Additionally, there are many situations in which genetic modification and/or the presence of a label in the cell population is not appropriate, chiefly in the context of therapy for clinical reasons including safety and in the case of personalised therapies the burden of labour & resources purely for optimisation.

Methods to monitor or characterise the outcome of iPSC differentiation processes that do not rely on labels have been proposed. For example, Williams et al. (Front. in Bioeng. and Biotech., July 2020, Vol. 8, Article 851) proposed a machine learning based approach to predict the content of cardiomyocytes as the outcome of a process of differentiation of iPSCs into cardiomyocytes in a stirred tank bioreactor, using process related features as predictor variables including physico-chemical data continuously collected online by the bioreactor system (dissolved oxygen concentration, pH, etc.) as well as offline determined data such as cell density, cell aggregate size and nutrient concentrations. However, this approach required the measurement of a very large number of physico-chemical parameters as well as the sampling of the culture for offline analysis. Thus, the process remained invasive and highly complex, and in particular not applicable to any context other than large scale cultures in advanced stirred tank bioreactors. As another example, Qian et al. (Nature Communications (2021) 12:4580) proposed an approach where metabolic imaging (in particular, autofluorescence of NAD(P)H and FAD) is used to discriminate experimental conditions associated with low vs. high differentiation efficiency of human pluripotent stem cells (hPSC) to cardiomyocytes (CM). However, this approach remains complex, requiring the measurement of fluorescence signals, and is only applicable to the very specific context of hPSC differentiation to CM where a dramatic metabolic change occurs during differentiation which impacts the fluorescent lifetime of these particular metabolites. Therefore, a need exists for improved systems and methods for monitoring cell populations undergoing a cell state transition process in cell culture, which do not suffer from all of the drawbacks of the prior art.

<u>Summary</u>

The present inventors hypothesised that it may be possible to monitor and predict the outcome of a cell state transition process occurring in a cell culture by analysing morphological features of cell populations visible in images collected using label-free imaging technologies. Indeed, the present inventors have recognised that trained humans are able to look at cell cultures under e.g. bright-field or phase contrast microscope and get a "feel" for the progress of the cell state transition process. This process is subjective, labour-intensive, and crucially lacks reproducibility and objective quantification which makes it unsuitable for implementation of a rigorous quality controlled industrial process. The present inventors however postulated that a more rigorous process could be developed which exploited the information content in these images. They developed methods using computer-implemented analysis of such microscope images that are able to pick out and quantify features that are informative of the progress of the cell state transition process, and integrate these into a statistical model that captures the relationship between these features and metrics that are associated with the cell state transition process (e.g. outcome features such as differentiation efficiency). They further showed that these methods were able to predict metrics associated with the cell state transition process, while the cell culture is underway, in the context of monitoring the differentiation of iPSC into cardiomyocytes. These methods do not suffer the drawbacks of the currently used approaches as there are label-free, non-invasive, simple, reproducible, fast, predictive, and without any requirements of modification of the cells.

According to a first aspect of the disclosure, there is provided a method for monitoring a cell population in cell culture, the method comprising: obtaining one or more images of the cell population acquired using label-free imaging during the cell culture process, processing the one or more images to obtain one or more label-free image-derived features, and predicting one or more metrics indicative of a cell state transition in the cell population using a statistical model that takes the label-free image-derived features as inputs and provides the one or more metrics indicative of a cell state transition in the cell population as outputs. According to the invention, the metrics indicative of a cell state transition in the cell population are metrics that characterise the progress and/or outcome of a cell state transition process occurring in a cell population, and the inputs of the statistical model do not include any feature obtained using an invasive or destructive measurement process. By monitoring the cell population in this way, the method may be used to determine an actual cell state of the population. The label free imaging may be an imaging technology (or a plurality of technologies) that provides information about the spatial configuration (e.g. location and/or morphology) of cells, cell structures, or groups of cells. Because the method is label-free, non-invasive, and has low phototoxicity, it enables the monitoring of a cell population undergoing a cell state transition while the cell culture is underway without any perturbation of the cell state transition process, possibly in real-time and/or with repeated / constant monitoring. This further also enables the implementation of responsive control based on the predictions made. This is not possible with any method that requires an invasive/destructive step as this perturbs or completely stops the cell state transition process. This is also not possible with any method that simply analyses e.g. the identity of cells or groups of cells at the end of a culture process (even if these are based on label-free images), because the absence of a prediction means that no corrective/responsive action can be taken. Further, the use of label-free images that provide information about the spatial configuration of cells, cell structures or groups of cells enables the monitoring of a cell population using simple imaging technologies (including e.g. optical microscopy) and provides an approach that is broadly applicable to a variety of cell state transition processes and available monitoring systems. This is in contrast to approaches such as e.g. that described in Qian et al. (Nature Communications (2021) 12:4580) where very specific fluorescence metrics indicative of a metabolic state of the cells provide a direct indication of which conditions are likely to result in high *vs* low differentiation efficiency in a particular set up, but are unable to provide more subtle or flexible information to predict different outcomes than high/low CM differentiation efficiency (e.g. more precise predictions, predictions informative of other features of the cell state transition process, or predictions in any other context than this particular differentiation process).

The method of the first aspect may have any one or any combination of the following optional features.

The cell state transition may be a differentiation, a de-differentiation, a transition from non-mobile to mobile, a cell activation, a change in the physiological processing capacity or a transition from non-senescent cell to senescent cell. Any cell state change that is associated with physical changes may be monitored using the methods described herein. A differentiation may be a directed differentiation, or a direct reprogramming. The cell population may be a population of pluripotent stem cells and the cell state transition is a differentiation. The inventors have identified differentiation as a cell state transition process where the methods of the invention are particularly beneficial as the differentiation process is complex, varies between applications, can vary between cell batches and cells with different genetic backgrounds in a way that is poorly understood, and has many therapeutic and experimental applications for which an improved ability to monitor and control the outcome and/or progress of the cell state transition is particularly crucial. The inventors have further demonstrated that the methods of the present invention are able to bring about these benefits in the context of differentiation, in particular by demonstrating their performance in the context of differentiation of iPSC into cardiomyocytes. Cell activation may refer to activation of any cell type. In particular, cell activation may refer to immune cell activation. Cell activation may refer to activation of a non-immune cell. Cell activation refers to a process whereby a cell acquires a new function or feature, typically upon stimulation. Cell activation may include the triggering of a cell proliferation programme, the triggering of expression of active agents such as e.g. cytokines, the triggering of a differentiation programme that leads to cell having a different function and/or structure. Cell activation may occur upon exposure of a cell to a particular stimulus. For example, T cells may become activated upon interaction with a peptide antigen presented by MHC class II molecules (helper CD4+ T cells) or MHC class I molecules (cytotoxic CD8+ T cells). Upon activation, T cells may proliferate and/or secrete cytokines. A change in the physiological processing capacity of a cell may refer to any change that affects the physiological functions performed by the cell.

The one or more metrics indicative of a cell state transition in the cell population may be selected from: metrics that are indicative of the progress of a cell state transition, metrics that are indicative of the efficiency of the cell state transition, and metrics that are indicative of the quality of the cell population for a particular purpose. The metrics that are indicative of the progress of a cell state transition may be selected from the identification of a stage in a cell state transition process, the percentage, proportion or number of cells in each of one or more stages of a cell state transition process, and the percentage, proportion or number of cells in each of one different cell state transition processes. The metrics that are indicative of the efficiency of the cell state transition may be selected from the number, percentage or proportion of cells that have reached a desired state of a cell state transition process. The metrics that are indicative of the quality of the cell population for a particular purpose may be selected from the percentage, number or proportion of cells that have one or more characteristics associated with the cell state transition process that make them suitable for a particular use. Examples of uses for which cells having undergone a particular cell state transition process (or cells having one or more characteristics associated with said cell state transition process) are beneficial include: the testing of potency and/or toxicity of therapeutic compounds (e.g. cardiotoxicity or hepatoxicity of therapeutic compounds), for example during either development or in theranostic processes; the use of the cells directly for cell therapy (e.g. autologous or allogeneic cell based therapeutic processes in which cells are delivered to the patient).

The one or more metrics indicative of a cell state transition in the cell population may be associated with the final stage of the cell state transition and/or the end of the cell culture. The one or more label-free image-derived features may be obtained by processing label-free images acquired prior to the end of the cell culture. The one or more label-free image-derived features may be obtained by processing label-free images acquired at a single time point or a plurality of time points. Thus, the method may be predictive in the sense that it predicts a metric that is not measured. This may be advantageous e.g. for metrics that cannot be measured while preserving the integrity or quality of the cells. Advantageously, the method may also be predictive in the sense that it predicts a metric that relates to a future time point. This may advantageously enable responsive control of the cell culture process. The methods of the present invention can be used to predict metrics indicative of a cell state transition in the cell population using data from a single time point (such as e.g. as exemplified in Example 1) or using data from a plurality of time points (such as e.g. as exemplified in Example 2). The plurality of time points may be defined by reference to a step in the cell culture process, such as e.g. a culture medium change, the addition of a compound (such as e.g. a growth factor, small molecule, inhibitor, etc.). Thus, the plurality of time points may be chosen as time points that are process parameters. Instead or in addition to this, the plurality of time points may be defined by reference to a sampling period, such as e.g. a predefined period between consecutive images that are used. Thus, the methods of the present disclosure are applicable to single label-free images as well as pluralities of label-free images that are part of a time lapse/video or that are selected based on one or more process parameters.

Processing the one or more images to obtain one or more label-free image-derived features may not include identifying single cells in the one or more images. The step of obtaining the label-free image-derived features may not require identification of single cells. The use of label-free image-derived features that do not require identification of single cells may advantageously increase the speed of processing, the field of applicability of the method (as simple imaging equipment may be used), the quantity of image data required to obtain reliable predictions (as larger areas of the cell culture /lower resolution images can be used) and the breadth of application as quantification of these features is not as limited by the density of cells in the cell sheet. Indeed, in many cases the use of methods requiring he identification of single cells is not possible as cell cultures are too dense to discern individual cells at least through some of the course of a cell state transition process. Thus, the one or more images of the cell population acquired using label-free imaging during the cell culture process may cover a surface area that includes a plurality of cells and/or may be acquired at relatively low magnification. For example, the one or more images of the cell population may have been acquired using a magnification below 100x, below 80x, below 60x, at or below 40x, at or below 20x, at or below 10x. For example, the one or more images of the cell population may have been acquired at a magnification of about 10x. The one or more images of the cell population may each show a plurality of colonies of cells, at least 100 cells, at least 200 cells, at least 500 cells, at least 1000 cells, at least 5000 cells or at least 10,000 cells. The one or more images of the cell population may each show a surface area of culture of at least 1 mm$^2$, at least 2 mm$^2$, at least 3 mm$^2$, at least 4 mm$^2$, at least 5 mm$^2$, at least 6 mm$^2$, at least 7 mm$^2$, at least 8 mm$^2$, at least 9 mm$^2$, or at least 10 mm$^2$.

Processing the one or more images to obtain one or more label-free image-derived features may comprise using an image analysis algorithm to quantify the one or more label-free image-derived features for the one or more images. A label-free image-derived feature may be a value (or plurality of values) that is/are quantified for an image or plurality of images using an image analysis algorithm. Each label-free image-derived feature of a plurality of label-free image-derived features may be obtained using a different image analysis algorithm. An image analysis algorithm may be a trained machine learning algorithm and/or a computer vision algorithm. Each label-free image derived feature may comprise one or more numerical values. Processing the one or more images to obtain one or more label-free image-derived features may comprise combining one or more numerical values each associated with a respective one of a plurality of images. Processing the one or more images to obtain one or more label-free image-derived features may comprise combining a plurality of numerical values associated with the same image. Each label-free image derived feature may comprise one or more numerical values, for example depending on the nature of the label-free image-derived feature and the image analysis algorithm used. One or more of the label-free image-derived features may be obtained by combining one or more numerical values each associated with a respective one of a plurality of images. In other words, at least some of the label-free image-derived features may be summarised values that combine values obtained by processing a plurality of images. The plurality of images may for example have been obtained for the same cell culture at the same time (e.g. multiple images of the same cell culture dish may have been obtained in order to better capture the diversity in the cell population). For example, a summarised value may be the average or sum of a plurality of values that are quantified for a respective plurality of images. One or more of the label-free image-derived features may be obtained by combining a plurality of numerical values associated with an image. In other words, some of the label-free image-derived features may be values that summarise a plurality of values obtained for the same image. For example, a summarised value may be the average or sum of a plurality of values that are quantified for a single image.

Each label-free image-derived feature may be selected from: (i) a label-free image-derived feature comprising a plurality of values each associated with a pixel in an image, or a summarised value derived therefrom, and (ii) a label-free image-derived feature comprising one or more values quantifying an expert-defined visual feature in an image, or a summarised value derived therefrom. A summarised value may be a value that is obtained by summarising a plurality of values over a single image and/or over a plurality of images. A summarised value may be for example the sum, average or median over a plurality of values. A summarised value may comprise a plurality of values, provided that the dimension of the summarised value is lower than the dimension of the values that it summarises. For example, a summarised value may be obtained by dimensionality reduction, such as e.g. using PCA. Instead or in addition to dimensionality reduction, a summarised value may be obtained as a discrete probability distribution over the bins of a histogram obtained for a representative dataset. For example, a set of label-free image-derived features (e.g. obtained from a reference data set such as a training data set) may be used to construct a first histogram comprising a plurality of bins. A further histogram may then be constructed for a candidate plurality of values by counting the number of values that fall within each bin of the first histogram. The further histogram represents a probability distribution, and the counts or normalised values therefrom (e.g. normalised to sum to 1) may be used as the summarised value for the plurality of values. When combining with dimensionality reduction, the set of label-free image-derived features used to construct a first histogram may be subject to a dimensionality reduction technique prior to constructing the first histogram. The same dimensionality reduction process may be applied to the candidate plurality of values. A summarised value may be a value that is obtained by summarising a plurality of values over a single image and/or over a plurality of images, wherein the plurality of values are each associated with pixels in the images or wherein the plurality of values are each associated with an expert-defined visual feature quantified in the one or more images. For example, the plurality of values may be predicted pixel intensities and the summarised value may be the sum, average or median pixel intensity. As another example, the plurality of values may be the cell density in each of a plurality of images and the summarised value may be the sum, average or median cell density across a plurality of images of the cell population. As another example, the plurality of values may be the sizes of cell clusters (e.g. islands of cells) and the summarised value may be the sum, average or median size of cell clusters. As yet another example, the plurality of values may be the areas of holes in the cell sheet or areas from which cell are substantially absent, and the summarised value may be the sum, average or median size of such areas.

Processing the one or more images to obtain one or more label-free image-derived features may comprise using a trained machine learning model to obtain a plurality of values each associated with a pixel in an image. The trained machine learning model may be selected from: a machine learning model that has been trained in a supervised manner to predict one or more signals associated with one or more markers of interest, a machine learning model that has been trained to learn a general-purpose feature representation of images for image recognition, a machine learning model that has been trained on microscopic images to learn features useful for microscopic image analysis, and a machine learning model that has been trained to identify variable features in a data set of microscope images. The machine learning model may have been pre-trained, for example using a general-purpose image data set (e.g. ImageNet) or a data set of microscopic images, and may have been further trained using a data set of label-free images of a cell population in a cell culture. For example, a pre-trained network that has been trained on an unrelated training data set may be further improved with self-supervised pretraining using a training data set comprising label-free images of cell population in cell culture, preferably wherein the label-free images have been acquired using the same or a similar label-free imaging technology (e.g. any optical microscopy technology is similar to any other optical microscopy technology) as that used in the monitoring process and/or wherein the label-free images have been acquired for cell populations undergoing the same cell state transition process as that which the cell population being monitored is undergoing. Without wishing to be bound by theory, the inventors believe that machine learning models that have been trained for image recognition or for processing of microscope images may provide a high dimensional numerical representation of an input image that captures its information content, at least some of which may be predictive of metrics indicative of a cell state transition. In other words, such models may identify a variety of image features, some of which may be irrelevant to the task of predicting metrics indicative of a cell state transition, and some of which may capture a feature of the cell population shown in the images that is predictive of the metrics indicative of a cell state transition. A statistical model may therefore be fitted which will extract those features that are predictive of the metrics indicative of a cell state transition. A summarised value (as described above) may be obtaining by summarising a plurality of values each associated with a pixel in an image. This may be advantageous when the plurality of values are predicted using a machine learning model that has been trained in a supervised manner to predict one or more signals associated with one or more markers of interest. This may be less advantageous when the plurality of values are predicted using a machine learning model that has been trained to learn a general-purpose feature representation of images for image recognition, a machine learning model that has been trained on microscopic images to learn features useful for microscopic image analysis, or a machine learning model that has been trained to identify variable features in a data set of microscope images. This is because in such cases the summarisation may lose some of the information that was associated with different features identified in the images.

The trained machine learning model may be a machine learning model that has been trained in a supervised manner to predict one or more signals associated with one or more markers indicative of a stage of a cell state transition. The machine learning model may have been trained to predict one or more signals associated with respective labels indicative of the presence of the respective marker. The machine learning model may have been trained to predict one or more labelled images based on an input label-free image, the labelled images showing one or more signals associated with one or more markers indicative of a stage of a cell state transition. A marker indicative of a stage of a cell state transition may be any marker that is known to be associated with the cell state transition in that its presence correlates with progress in the cell state transition process. For example, a marker may be a marker associated with the final stage of a cell state transition. Alternatively, a marker may be a marker associated with an intermediate stage of a cell state transition. A marker may be a protein or other biomolecule whose presence correlates with progress in the cell state transition process. For example, when monitoring the differentiation of pluripotent cells into cardiomyocytes, a marker such as NKX2.5 may be used. Expression of NKX2.5 is known to correlate with differentiation into cardiomyocytes. Other markers that may be used depend on the cell state transition process that is being monitored. The skilled person would be able to identify markers that are suitable for use in a particular context. For example, markers of various stages of differentiation are known in many contexts in the literature. Further, the suitability of a particular candidate marker for use in the context of the present invention may be assessed by obtaining a machine learning model trained in a supervised manner to predict a signal associated with the candidate marker, fitting a statistical model to predict one or more metrics indicative of a cell state transition (the choice of metrics depending on the objectives of the monitoring), and verifying that the statistical model is able to predict the one or more metrics of interest.

The machine learning model may have been trained to predict a signal associated with a label indicative of the presence of the marker, or a plurality of signals each associated with a label indicative of the presence of a marker. Thus, the machine learning model may have been trained to take as input a label-free image and produce as output one or more corresponding labelled images where the signal in each labelled image is indicative of the presence of one or more markers. Such a machine learning model may be obtained by training a machine learning model using training data comprising pairs of label-free images and corresponding labelled images, wherein the labelled images show one or more signals associated with respective labels indicative of the presence of a respective marker. A label may be associated with a marker by co-expression, such as e.g. when the marker is a protein that is expressed as a tagged protein comprising a label (e.g. a fluorescent label). Alternatively, a label may be associated with the marker by labelling of the cells using any labelling process known in the art, such as e.g. immunofluorescence, immunohistochemistry, etc. The machine learning model may comprise a plurality of individual machine learning models. These may have been trained to perform the same task (in which case they machine learning model may be referred to as an "ensemble model". Alternatively, the machine learning model may comprise a plurality of machine learning models (each of which may comprise a single model or an ensemble model) trained in a supervised manner to predict one or more signals associated with one or more markers indicative of a stage of a cell state transition, wherein the one or more signals differ between the plurality of machine learning models. For example, the machine learning model may comprise a plurality of machine learning models each trained to predict a respective signal associated with a respective marker indicative of a stage of a cell state transition. The machine learning model be trained to predict a multi-channel image. A multi-channel image is an image that comprises a plurality of signals (one per channel). Each of said plurality of signals may be associated with a respective marker. Where multi-channel images are used, they may advantageously be predicted using a machine learning model that comprises a single machine learning model or an ensemble of machine learning models trained to perform the same task of jointly predicting the signals associated with the multiple channels. Alternatively, a plurality of machine learning models may independently be trained to predict the signal associated with a respective one or more of the multiple channels. This may be a less preferred alternative as models that jointly predict the signal in the multiple channels may be able to learn features that are informative to multiple of the channels. The trained machine learning model may be an artificial neural network (ANN, or ensemble of ANNs). An ANN may be a convolutional neural network (CNN, or ensemble of CNNs). The ANN may be any ANN suitable for image analysis, such as a CNN, in particular a U-Net or a modified version therefrom. The labelled images used for training may have been pre-processed, for example to increase the signal-to-noise ratio. Similarly, the label-free images may be pre-processed, for example to increase the signal-to-noise ratio. Pre-processing of images may comprise one or more of subtracting a background value from all pixels in an image, clipping pixel intensities in an image, normalising pixel intensities in an image, cropping and/or resizing an image.

Processing the one or more images to obtain one or more label-free image-derived features may comprise using a computer vision algorithm to obtain one or more values quantifying an expert-defined visual feature in the one or more images. The expert-defined visual feature may be a feature that is directly interpretable and visible in the label-free images. The expert-defined visual feature may be a population-level feature. The expert-defined visual feature may be selected from: the number of cells, the degree of confluence of the cells, the ratio and/or proportion of cells having particular cellular phenotypes, one or more values associated with the general structure and morphology of the cell layer, and the number and/or size of groups of cells having particular phenotypes. A value associated with the general structure and morphology of the cell layer may be any value that characterises the appearance of the cell layer such as e.g. by assessing/quantifying the presence of gaps in the cell layer, variations in cell density across the cell layer, etc. Processing the one or more images to obtain one or more label-free image derived features may comprise obtaining one or more values quantifying an expert-defined visual feature in the one or more images as well as obtaining a label-free image-derived feature comprising a plurality of values each associated with a pixel in an image. In other words, both types of features may be obtained from the one or more label-free images. Where a plurality of label-free image-derived features are obtained, these may be concatenated and provided as one or more combined inputs to the statistical model. Alternatively, the statistical model may comprise a plurality of statistical models each taking as input one or more label-free image derived features, the predictions of which are combined.

The label-free imaging may be non-fluorescent label-free imaging. The label-free imaging may be optical microscopy, Raman microscopy, optical coherence tomography, quantitative phase imaging, ptychography, photo-acoustic microscopy. The optical microscopy may be phase contrast microscopy or brightfield microscopy. In general, any label-free imaging technology that is able to provide information on physical features of the cell population (e.g. location and/or morphology of cells, cell structures, or groups of cells) may be used within the context of the present invention. The present inventors have demonstrated the use of optical microscopy as a convenient and widely available source of label-free images for use in the context of the present invention. In particular, Examples 1 and 2 use phase contrast microscopy. Further, the inventors have demonstrated that image analysis algorithms that are trained/developed to analyse phase contrast images to obtain label-free image-derived features are transferable to other types of optical microscopy such as brightfield microscopy, and vice versa (data not shown). Thus, it is not necessary for the image analysis algorithms that are used to process the label-free images to have been developed for use with the particular label-free imaging modality that is used, although it may be beneficial and convenient to do so.

The statistical model used to predict the one or more metrics indicative of a cell state transition in the cell population may further take as inputs the values of one or more process parameters, wherein a process parameter is a predetermined value that characterises how the cell culture process is run. The one or more process parameters may be selected from: the identity of one or more growth factors and/or small molecules and/or nutrients used to control the cell state transition process, the timing of addition of one or more growth factors and/or small molecules and/or nutrients, the concentration of addition of one or more growth factors and/or small molecules and/or nutrients, the cell seeding density, or any value derived therefrom. Values derived from such process parameters may include for example values obtained by a mathematical transformation of the value of such parameters. For example, where a non-linear relationship between the value of a process parameter and one or more of the predicted metrics is suspected or investigated, a value derived from the value of said parameter may be used instead of the original value, which reflects a non-linear relationship (e.g. the square or any other exponent including fractional exponents of the value). In general, any process parameter that may influence the outcome and/or progress of a cell state transition may be included as a further input of the statistical model used to predict the one or more metrics indicative of a cell state transition in the cell population. The present inventors have demonstrated in Example 2 that at least some such parameters contribute to the predictions made by a statistical model trained to predict differentiation efficiency. The specific identity of the one or more process parameters may depend on the context and in particular on the cell state transition process as well as the metrics of interest. Further, whether a candidate process parameter influences the outcome and/or progress of a cell state transition may be determined by including the candidate process parameter as a further input of a statistical model trained/fitted to predict the one or more metrics indicative of a cell state transition in the cell population, and determining whether the resulting trained/fitted model is predictive of the one or more metrics of interest. The features of the resulting trained/fitted model may further be investigated (such as e.g. the coefficients of a linear model, the weights or a regression tree, etc.) in order to determine whether the candidate parameter contributes significantly to the prediction made by the model. Instead or in addition to this, a feature selection process as known in the art may be applied during the training/fitting of the statistical model to identify variables that are predictive of the metrics of interest. The statistical model used to predict the one or more metrics indicative of a cell state transition in the cell population may not take as input any measured values other than the label-free image-derived features. Any additional inputs may be predetermined (i.e. settings rather than measurements).

The statistical model may be a regression model. The statistical model may have been obtained by training a statistical model to predict the one or more metrics indicative of a cell state transition based on inputs including the label-free image-derived features. The statistical model may be a linear regression model or a non-linear regression model. The statistical model may be selected from a simple linear regression model, a multiple linear regression model, a partial least square regression model, an orthogonal partial least square regression, a random forest regression model, a decision tree regression model, a support vector regression model, and a k-nearest neighbour regression model. The statistical model may have been obtained by training a statistical model to predict the one or more metrics indicative of a cell state transition based on inputs including the label-free image-derived features using training data comprising the values of the label-free image-derived features determined for a plurality of cell cultures and the corresponding values of the one or more metrics indicative of a cell state transition. The corresponding values of the one or more metrics indicative of a cell state may be measured values or metrics derived from measured values for the cell cultures from which the label-free image-derived features were determined. The training data may comprise, for a plurality of cell cultures: one or more label-free images acquired during the cell cultures, or label-free image-derived features derived from said images; the value(s) of one or more further predictive variables, such as e.g. process parameters; and corresponding values of the one or more metrics indicative of a cell state transition, wherein the values are measured values or values or values derived from measured values. The wording "corresponding values" means that the values are obtained for the same cell cultures from which the label-free mages were acquired. In other words, the statistical model is trained/fitted to predict metrics of interest for a cell culture based on predictive variables (including label-free image-derived features) for the same cell culture.

Preferably, the statistical model has been trained using training data for a plurality of cell cultures undergoing the same or a similar cell state transition process as that being monitored. For example, if the statistical model has been trained using training data for a plurality of cell cultures undergoing a differentiation to cardiomyocytes, the statistical model is suitably used to monitor a cell population undergoing a differentiation to cardiomyocytes. The cell state transition processes in the training data and in the cell culture being monitored may start from the same cells, result in the same cells, and comprise the same stages, in which case the cell state transition processes may be considered to be the same. Alternatively, the cell state transition processes in the training data and in the cell culture being monitored may result in the same cells, but may not start from the same cells and/or may not comprise all of the same stages. In such cases, the cell state transition processes may be considered to be similar. For example, a statistical model that has been trained to predict metrics of interest using training data from cell cultures undergoing a differentiation from iPSCs to cardiomyocytes may be used to predict metrics of interest for cell cultures undergoing a differentiation from embryonic stem cells to cardiomyocytes. Measured values that can be used as metrics indicative of a cell state transition or that can be used to obtain the value of metrics indicative of a cell state transition include: the number, percentage or proportion of cells having particular characteristics, such as e.g. cells expressing one or more markers (determined using e.g. fluorescence activated cell sorting (FACS), immunohistochemistry, mass cytometry, etc.), cells having a particular morphology (e.g. presence of particular organelles, particular features of shape such as features of cell boundaries, cell protrusions, etc., determined using e.g. labelled or label-free imaging), cells having a particular function (such as e.g. mobility, contractility, ability to proliferate or lack thereof, determined using any assays known in the art depending on the function that is measured); the value of one or more metrics indicative of physiological activity (such as e.g. oxygen uptake, determined using any assay known in the art).

The metrics indicative of a cell state transition may be associated with a stage of the cell state transition which may be but does not have to be the final stage of the cell state transition. The choice of metrics depends on the cell state transition and the purpose of the monitoring. For example, where the purpose of the monitoring is to predict cell state transition efficiency (and optionally control the process to optimise said efficiency), the metrics may be chosen to be associated with the final stage of the cell state transition, or any preceding stage that directly correlates with the efficiency of transition to the final stage of the cell sate transition. As another example, where the purpose of the monitoring is to predict the intermediate stage at which the cell population is at a particular point in the cell culture or the efficiency of transition to the intermediate stage, the metrics may be chosen to be associated with one or more intermediate stages of the cell state transition. Suitable metrics may therefore depend on the cell state transition process being monitored, the cell population, and the purpose of the monitoring method. Metrics indicative of the outcome and/or progress of cell transition processes are described in the literature for a plurality of cell transition processes such as e.g. directed differentiation. For example, the percentage of cells that are cardiomyocytes at the end of a differentiation process to produce cardiomyocytes can be used as a metric indicative of the outcome of this cell state transition process (e.g. to quantify differentiation efficiency). This can be measured as the percentage of cells that are positive for expression of cardiac troponin T, for example using FACS, as known in the art. Similar metrics and assays to measure said metrics are available in the literature. Thus, the methods described herein may comprise one or more of: identifying one or more metrics indicative of a cell state transition process that characterise the progress and/or outcome of the particular cell state transition process, identifying one or more label-free image-derived features that are predictive of one or more metrics indicative of a cell state transition process, identifying one or more process parameters that are predictive of one or more metrics indicative of a cell state transition process, providing an image processing algorithm that is adapted to process label-free images to obtain one or more label-free image-derived features (such as e.g. by training a machine learning model to output such features or values from which such features can be derived, from an input label-free image), providing a statistical model that is adapted (i.e. trained, fitted) to predict one or more metrics indicative of a cell state transition process using predictive variables including the one or more label-free image-derived features, obtaining training data to provide an image processing algorithm and/or a statistical model (whether by receiving or retrieving said data from a database, user interface or computer device, or by acquiring said data from a plurality of cell cultures), acquiring the one or more images of the cell culture using a label-free imaging technique, and culturing the cell population. Culturing the cell population may comprise maintaining the cell population in an artificial environment that is compatible with cell viability and with the cell state transition process. Culturing the cell population may further comprise implementing one or more steps defined by process parameters to cause the cells to control the cell state transition (such as e.g. cause the cell state transition to occur). The process parameters may relate to the identity and/or timing of addition and/or concentration of one or more compounds or compositions provided in the cell culture environment to control the cell state transition. The artificial environment may be a cell culture dish, maintained in a live-cell analysis system such as e.g. Incucyte™.

The cell culture may be an adherent cell culture, a two-dimensional cell culture, a three-dimensional cell culture, a cell culture in a plate or flask. Label-free images acquired from this type of cell cultures are believed to be more likely to be informative. The methods described herein are computer-implemented unless context specifies otherwise (such as e.g. where measurement steps and/or wet steps are involved). The methods may further comprise providing one or more results of the method to a user, for example through a user interface. The results may include: the predicted value(s) of the one metrics indicative of the cell transition process, and/or any information derived therefrom (such as e.g. a control action or recommendation), and/or the values of one or more of the label-free image-derived features.

According to a second aspect, there is provided a method for providing a tool for monitoring a cell population in cell culture, the method comprising: (i) obtaining a training data set comprising: one or more label-free images of a plurality of cell populations undergoing a cell state transition in cell culture, or the values of one or more label-free image-derived features obtained by processing said images; corresponding values of one or more metrics indicative of the cell state transition, wherein the values are measured values or values or values derived from measured values, and wherein the metrics indicative of the cell state transition characterise the progress and/or outcome of the cell state transition; (ii) obtaining an image analysis algorithm adapted to process label-free images to obtain the one or more label-free image-derived features, and (iii) providing a statistical model that predicts the values of the one or more metrics indicative of a cell sate transition in the training data using inputs comprising the one or more label-free image-derived features from the training data and optionally the values of one or more process parameters in the training data, wherein the inputs of the statistical model do not include any feature obtained using an invasive or destructive measurement process. Each label-free image may have been acquired using an imaging technology that provides information about the spatial configuration (e.g. location and/or morphology) of cells, cell structures, or groups of cells. The method according to the present aspect may have any of the features disclosed in relation to the first aspect. The method of the present aspect may further have any one or any combination of the following optional features. Step (i) may further comprise obtaining the value(s) of one or more process parameters, wherein a process parameter is a predetermined value that characterises how the cell culture process is run. Step (i) may further comprise obtaining one or more labelled images corresponding to the label-free images. Step (ii) (may comprise obtaining an image analysis algorithm adapted to process label-free images to obtain the one or more label-free image-derived features using the one or more labelled images corresponding to the label-free images. The method may further comprise one or more of: providing the statistical model to a user, data storage device or computing device, providing the image analysis algorithm to a user, data storage device or computing device. Obtaining a training data set may comprise identifying one or more metrics indicative of a cell state transition process that characterise the progress and/or outcome of the particular cell state transition process, identifying one or more label-free image-derived features that are predictive of one or more metrics indicative of a cell state transition process, identifying one or more process parameters that are predictive of one or more metrics indicative of a cell state transition process, acquiring the one or more images of the cell culture using a label-free imaging technique, acquiring the one or more corresponding labelled images, measuring the corresponding values of one or more metrics indicative of the cell state transition or values from which such metrics can be derived, and/or culturing the plurality of cell populations.

According to a third aspect, there is provided a method of providing a cell population that has undergone a cell state transition, the method comprising: culturing a cell population in conditions suitable for the cells to undergo the cell state transition; and monitoring the cell population using the method of any embodiment of the first aspect. The method may further comprise implementing one or more control actions based on the predicted metrics indicative of a cell state transition. A control action may be selected from: addition of a compound or composition to the cell culture, change of the liquid medium in the cell culture, modifying a scheduled time and/or concentration of addition of a compound or composition to the cell culture. The predicted metrics indicative of a cell state transition may be used to determine one or more control actions to be taken. Examples of control actions include the addition of a compound or composition such as a growth factor, cytokine, inhibitor etc, a change of culture medium, and any other action that may be taken to modify the environment of the cell population and that may impact the cell state transition. In embodiments, the identity and order of addition of one or more compounds or compositions that may impact the cell state transition may be predetermined, and the timing and/or concentration of additions of one or more of said compounds or compositions may be determined dynamically depending on one or more predicted metrics indicative of a cell state transition. This may be particularly useful as many cell state transition processes can be effected in cell culture using a known sequence of control actions, but where the precise parameters of the control actions that are optimal for a cell population and desired cell state transition outcome may vary depending on e.g. the genetic background of the cell population.

Thus, also described herein is a method of controlling a cell culture to obtain a desired cell state transition in a cell population, the method comprising: monitoring the cell population using the method of any embodiment of the first aspect; and determining one or more control actions based on the predicted metrics indicative of a cell state transition, optionally wherein the control action is selected from: addition of a compound or composition to the cell culture, change of the liquid medium in the cell culture, modifying a scheduled time and/or concentration of addition of a compound or composition to the cell culture. The method may further comprise culturing the cell population in conditions suitable for the cells to undergo the cell state transition. The method may further comprise implementing the determined one or more control actions.

The methods described herein find use in the context of producing cells for therapy (including cell therapy and tissue-based therapy), for tissue engineering, for drug screening, or for safety pharmacology. The methods described herein may be used for constant/repeated monitoring of a cell culture, for responsive control of a cell culture, and as an accurate basis for a decision with respect to quality control or a control step. Further, any such control step and its outcome can be recorded and used together with the predictions from the method as a basis for continuous improvement of a cell culture process.

According to a fifth aspect, there is provided a system for monitoring a cell culture, the system including: at least one processor; and at least one non-transitory computer readable medium containing instructions that, when executed by the at least one processor, cause the at least one processor to perform operations comprising: obtaining one or more images of the cell population acquired using label-free imaging during the cell culture process, processing the one or more images to obtain one or more label-free image-derived features, and predicting one or more metrics indicative of a cell state transition in the cell population using a statistical model that takes the label-free image-derived features as inputs and provides the one or more metrics indicative of a cell state transition in the cell population as outputs. According to the invention, the metrics indicative of a cell state transition in the cell population are metrics that characterise the progress and/or outcome of a cell state transition process occurring in a cell population, and the inputs of the statistical model do not include any feature obtained using an invasive or destructive measurement process. A label-free imaging may be selected as an imaging technology that provides information about the spatial configuration of cells, cell structures, or groups of cells. The system according to the present aspect may be configured to implement the method of any embodiment of the first aspect. In particular, the at least one non-transitory computer readable medium may contain instructions that, when executed by the at least one processor, cause the at least one processor to perform operations comprising any of the operations described in relation to the preceding aspects.

According to a sixth aspect there is providing a system for providing a tool for monitoring a cell culture, the system including: at least one processor; and at least one non-transitory computer readable medium containing instructions that, when executed by the at least one processor, cause the at least one processor to perform operations comprising: (i) obtaining a training data set comprising: one or more label-free images of a plurality of cell populations undergoing a cell state transition in cell culture, or the values of one or more label-free image-derived features obtained by processing said images; corresponding values of one or more metrics indicative of the cell state transition, wherein the values are measured values or values or values derived from measured values, and wherein the metrics indicative of the cell state transition characterise the progress and/or outcome of the cell state transition; (ii) obtaining an image analysis algorithm adapted to process label-free images to obtain the one or more label-free image-derived features, and (iii) providing a statistical model that predicts the values of the one or more metrics indicative of a cell sate transition in the training data using inputs comprising the one or more label-free image-derived features from the training data and optionally the values of one or more process parameters in the training data, wherein the inputs of the statistical model do not include any feature obtained using an invasive or destructive measurement process. A label-free image may have been acquired using an imaging technology that provides information about the spatial configuration of cells, cell structures, or groups of cells. The system according to the present aspect may be configured to implement the method of any embodiment of the second aspect. In particular, the at least one non-transitory computer readable medium may contain instructions that, when executed by the at least one processor, cause the at least one processor to perform operations comprising any of the operations described in relation to the second aspect.

According to a seventh aspect, there is provided a system for providing a cell population that has undergone a cell state transition and/or for controlling a cell culture, the system including: at least one processor; and at least one non-transitory computer readable medium containing instructions that, when executed by the at least one processor, cause the at least one processor to perform operations comprising: monitoring the cell population using the method of any embodiment of the first aspect and optionally determining and/or triggering one or more actions necessary for culturing a cell population in conditions suitable for the cells to undergo the cell state transition and/or determining one or more control actions based on the predicted metrics indicative of a cell state transition. The system according to the present aspect may be configured to implement the method of any embodiment of the third or fourth aspect.

The system according to any aspect described herein (such as e.g. any of the fifth to seventh aspects) may comprise one or more of: a cell culture environment (such as e.g. an incubator), one or more sensors (such as e.g. one or more label-free imaging devices), and one or more effectors (such as e.g. one or more liquid handling systems).

According to a further aspect, there is provided a non-transitory computer readable medium comprising instructions that, when executed by at least one processor, cause the at least one processor to perform the method of any embodiment of any aspect described herein.

According to a further aspect, there is provided a computer program comprising code which, when the code is executed on a computer, causes the computer to perform the method of any embodiment of any aspect described herein.

Brief Description of the Drawings

Embodiments of the present disclosure will now be described by way of example with reference to the accompanying drawings in which:

Figure 1 is a flowchart illustrating a method for monitoring a cell population in a cell culture according to a general embodiment of the disclosure;

Figure 2 is a flowchart illustrating a method for providing a tool for monitoring a cell population in a cell culture according to an embodiment of the disclosure;

Figure 3 illustrates schematically an exemplary system according to the disclosure;

Figure 4 is a flowchart illustrating a method of providing a tool for monitoring a cell population in a cell culture (left of the vertical dashed line) and a method of monitoring a cell population in a cell culture (right of the vertical line), according to an embodiment of the disclosure.

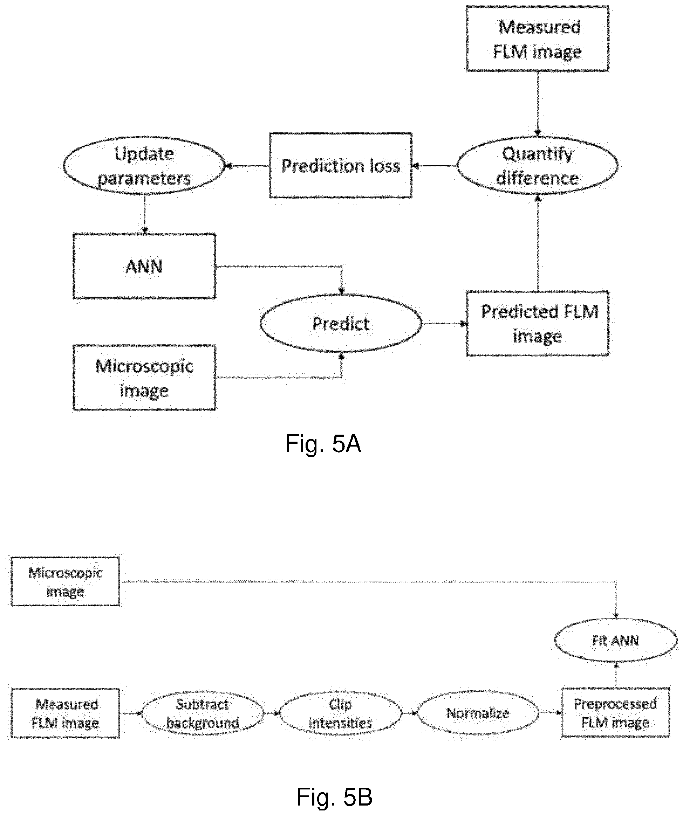

Figure 5A is a flowchart illustrating a machine learning model training procedure, which can be used to obtain a trained machine learning model for processing label-free images to obtain label-free image derived features; and Figure 5B is a flowchart illustrating a labelled image pre-processing procedure which can be used in combination with a machine learning model training procedure, according to embodiments of the disclosure; in the embodiment shown, the machine learning model is an artificial neural network (ANN) trained to predict a fluorescence light microscopy (FLM) image from a label-free microscope image (such as e.g. a phase contrast image);

Figure 6 shows the results of implementation of an exemplary step of processing label-free images of a cell culture to obtain a label-free image feature; in particular, an artificial neural network was trained to predict fluorescence images (NKX2.5-GFP) from label-free images (phase contrast): A. example input, expected output and output of the artificial neural network; B. linear regression of the sum of pixel intensities for each test set image (x-axis are predicted fluorescence intensities, y-axis are measured fluorescence intensities), R2=69%;

Figure 7 shows the results of a validation of the step of processing label-free images of a cell culture to obtain a label-free image feature for which results are shown on Figure 6; the percentage of GFP positive cells was measured by FACS and compared to the data from the fluorescence images (left) and to the predicted data based on the label-free images (right) (A);

the data in A shows that the predicted images better correlate with the FACS data than the fluorescence images (R2=77% and 41%, respectively for the predicted and measured image features), possibly due to low signal to noise ratio in some of the fluorescence images (B);

**Figure 8** shows the results of implementation of an exemplary step of predicting a metric indicative of a cell state transition in a cell population using the label-free image features of

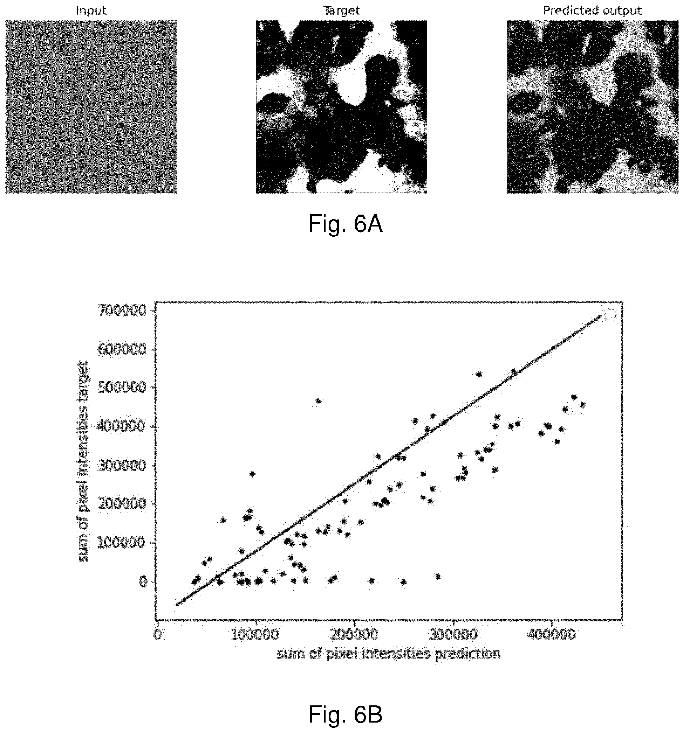

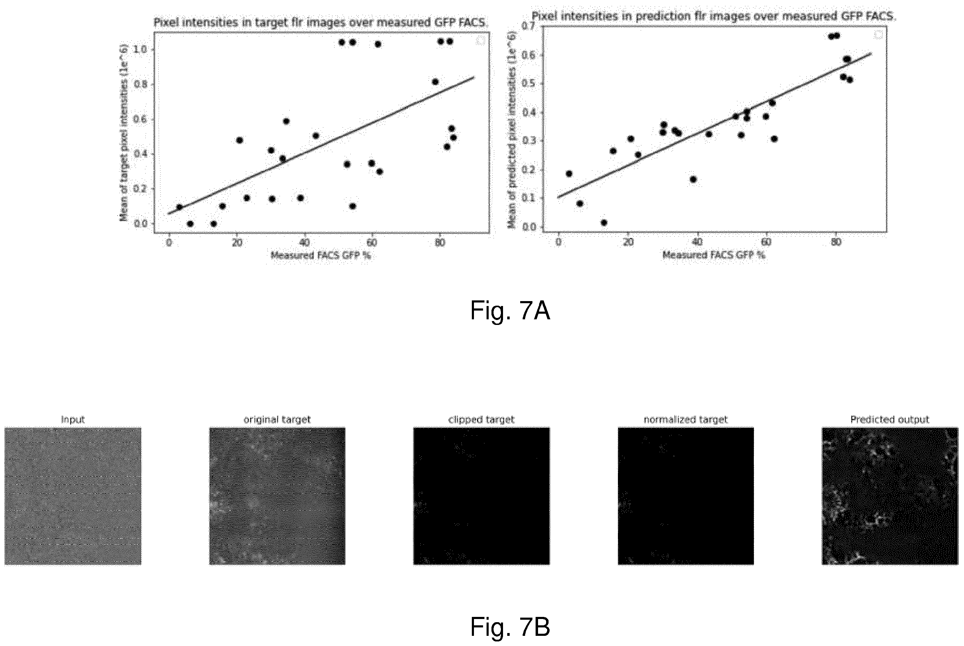

Figures 6 and 7 (bottom, R2=67%) compared to using the fluorescence images (top, R2=15%);

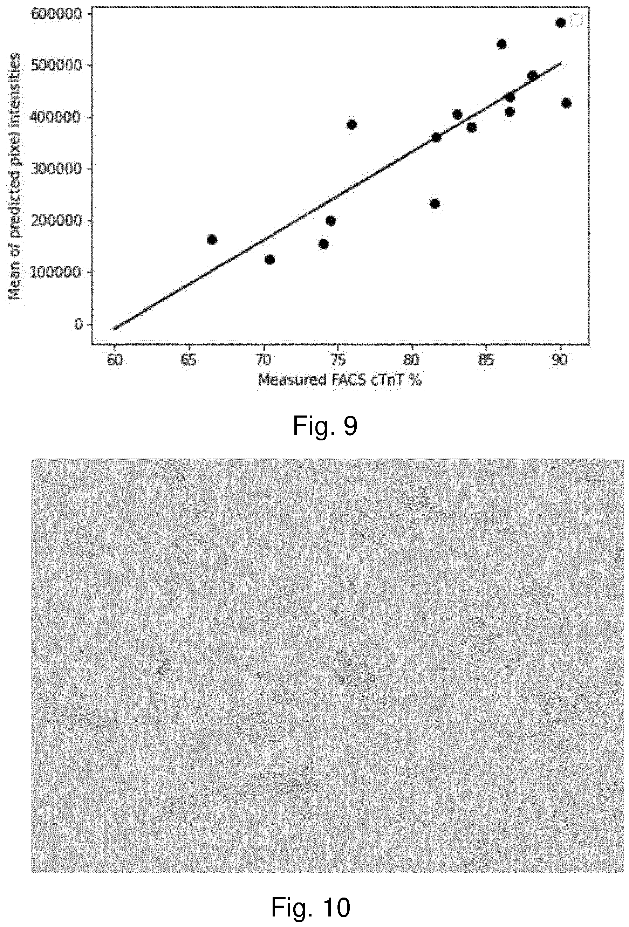

**Figure 9** shows the results of validation of the method used in Figures 6-8 to predict a metric indicative of a cell state transition in a cell population from label-free images in a different cell line (no NKX2.5-GFP reporter), R2=76%;

**Figure 10** shows an illustrative image showing examples of "islands" of cells, one of the label-free image features quantified in an exemplary step of processing label-free images of a cell culture to obtain a label-free image feature;

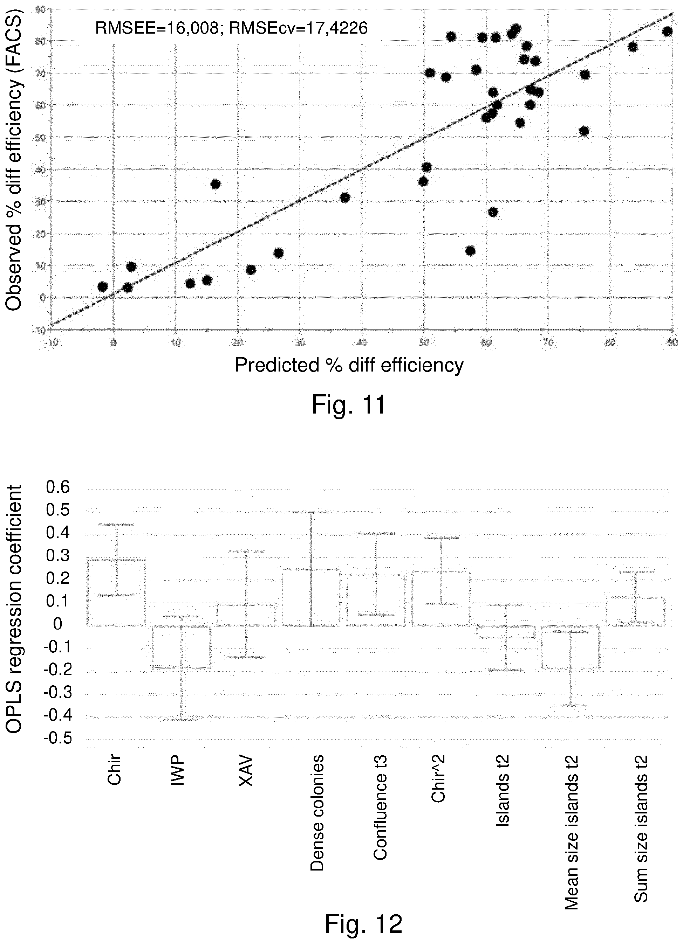

**Figure 11** shows the results of implementation of an exemplary step of predicting a metric indicative of a cell state transition in a cell population using label-free image features and process parameters;

**Figure 12** shows OPLS regression coefficients of the regression model used in Figure 11, predicting differentiation efficiency (metric indicative of a cell state transition in a cell population) based on growth factor concentrations (process parameters) and label-free image features; a positive contribution indicates that the factor correlates positively with the response, while a negative contribution indicates that the factor correlates negatively with the response; errors bars show jack-knifed confidence intervals based on k-fold cross validation. Chir=concentration of CHIR99021, IWP=concentration of IWP-2, XAV=concentration of XAV939, dense colonies=presence of dense colonies (binary) at time of medium change 3, confluence t3=% confluence at time of medium change 3, Chir^2=squared concentration of CHIR99021, Islands t2=number of islands at time of medium change 2, mean size islands t2=average size of islands at time of medium change 2, sum size islands t2=sum of size of islands at time of medium change 2.

Where the figures laid out herein illustrate embodiments of the present invention, these should not be construed as limiting to the scope of the invention. Where appropriate, like reference numerals will be used in different figures to relate to the same structural features of the illustrated embodiments.

Detailed Description

Specific embodiments of the invention will be described below with reference to the figures.

A cell culture refers to a bioprocess whereby live cells are maintained in an artificial environment such as a cell culture dish. A cell culture dish may be a plate, a flask, or any other type of container that is compatible with the acquisition of label-free images of a cell culture while the cell culture is underway, without sampling of the cell culture. The methods and systems described herein are applicable to bioprocesses that use any types of cells that can be maintained in culture, whether eukaryotic or prokaryotic. In embodiments, the cells are eukaryotic cells, preferably animal cells. In embodiments, the cells are mammalian cells. In embodiments, the cells are pluripotent cells, such as embryonic stem cells, adult stem cells, or induced pluripotent stem cells.

As used herein, the terms "computer system" of "computer device" includes the hardware, software and data storage devices for embodying a system or carrying out a computer implemented method, such as e.g. for printing a 3D object as part of a 3D printing system. For example, a computer system may comprise one or more processing units such as a central processing unit (CPU) and/or a graphical processing unit (GPU), input means, output means and data storage, which may be embodied as one or more connected computing devices. Preferably the computer system has a display or comprises a computing device that has a display to provide a visual output display (for example in the design of the business process). The data storage may comprise RAM, disk drives or other computer readable media. The computer system may include a plurality of computing devices connected by a network and able to communicate with each other over that network. For example, a computer system may be implemented as a cloud computer. The term "computer readable media" includes, without limitation, any non-transitory medium or media which can be read and accessed directly by a computer or computer system. The media can include, but are not limited to, magnetic storage media such as floppy discs, hard disc storage media and magnetic tape; optical storage media such as optical discs or CD-ROMs; electrical storage media such as memory, including RAM, ROM and flash memory; and hybrids and combinations of the above such as magnetic/optical storage media.

The disclosure relates to the monitoring of cell populations undergoing a cell state transition process in a cell culture. As used herein, a cell state transition process is a process whereby at least part of a population of cell moves from one cellular state to another, wherein cellular states are characterised by a different physiology and/or behaviour. Examples of cell state transition processes include a differentiation process, a de-differentiation process, a transition from non-mobile to mobile, and senescence. In embodiments, the cell state transition process is a differentiation process, for example a directed differentiation process or a direct reprogramming process. A directed differentiation process is a process involving the transition from a pluripotent cell state to a differentiated cell state. For example, the transition of pluripotent or multipotent cells (such as e.g. embryonic stem cells, adult stem cells, induced pluripotent stem cells) to any differentiated cell type (such as e.g. neuron, cardiomyocyte, etc) is a directed differentiation process. A direct reprogramming process is a process involving the transition from a differentiated cell state to another differentiated cell state. A de-differentiation process is a process involving the transition from a somatic cell state (differentiated cell) to a pluripotent cell state. De-differentiation is typically performed in the context of production of iPSCs but may occur in other contexts. A cell state transition process may comprise one or more stages through which the cell may progress between the initial cell state and the final cell state of the cell state transition process. The stages of a cell state transition process may be defined based on changes in a series of characteristics that identify intermediate states that are known to occur along the cell state transition. The characteristics may be any structural or biochemical characteristic that varies along the cell state transition process, that can be observed, and that is indicative of progress along the cell state transition. For example, the characteristics may include the appearance/disappearance of markers (e.g. cell proteins or antigens) and/or morphologies, the presence of particular patterns of presence of compounds (including expression products) within the cells (e.g. transcriptional signatures of stages), metrics indicative of physiological activity (e.g. oxygen uptake), the appearance/disappearance of particular cellular structures (e.g. dendrites) or functions (e.g. appearance of contractility), and combinations thereof. For example, as described in Williams et al., (2020), cardiomyocyte differentiation from pluripotent stem cells occurs through stages including early primitive-streak-like priming, mesendoderm specification, and cardiac progenitor and cardiac mesoderm induction, followed by their expansion, terminal differentiation, and maturation. Each of these stages can be tracked through the appearance of particular markers, for example by immunofluorescence.

The disclosure relates in particular to the prediction of metrics indicative of a cell state transition in a cell population. These may also be referred to as "metrics of interest". These are metrics that characterise the progress and/or outcome of a cell state transition in a population. These may include any metric that is indicative of: the progress of a cell state transition (such as e.g. the identification of a stage in a cell state transition process, the percentage, proportion or number of cells in each of one or more stages of a cell state transition process, the percentage, proportion or number of cells in each of one different cell state transition processes, etc.), efficiency of the cell state transition (such as e.g. the number, percentage or proportion of cells that have reached a predetermined - also described as "final" or "desired"- state of a cell state transition process), the quality of the cell population for a particular purpose (such as e.g. the percentage, number or proportion of cells that have one or more characteristics associated with the cell state transition process that make them suitable for a particular use).

The methods described herein use features derived from images of cell cultures obtained using label-free imaging technologies. Label-free imaging technologies suitable for use according to the present invention include optical microscopy such as phase contrast microscopy and bright-field microscopy, and Raman microscopy. The features derived from images of cell cultures obtained using label-free imaging technologies are referred to herein as "label-free image-derived features".

Label-free image-derived features are values that are quantified for an image or set of images using an image analysis algorithm. Each label-free image derived features may comprise one or more numerical values (i.e. a label-free image-derived feature may be a vector or a scalar). Each label-free image-derived feature may be obtained by summarising a scalar or vector of image-derived features over a single image or a plurality of images. The scalar or vector of image derived features may comprise a plurality of values each associated with a pixel in an image, or one or more values quantifying an expert-defined visual feature in an image. These values may be obtained using one or more trained machine learning models and/or one or more computer vision algorithms. In embodiments where the scalar or vector of image derived features comprises a plurality of values each associated with a pixel in an image, these pixel-associated values are typically determined as the output of a machine learning algorithm such as an artificial neural network (e.g. a convolutional neural network). Suitable machine learning models include: machine learning models that have been trained in a supervised manner to predict a signal associated with a marker of interest (e.g. a fluorescence light microscopy signal associated with a fluorescently tagged marker of interest), machine learning models that have been trained on a general-purpose dataset of non-microscopic images (such as e.g. ImageNet, Deng, J., Dong, W., Socher, R., Li, L.-J., Li, K., & Fei-Fei, L. (2009). Imagenet: A large-scale hierarchical image database. In 2009 IEEE conference on computer vision and pattern recognition (pp. 248-255)) to learn a general-purpose feature representation of images, such as e.g. any machine learning model trained for general purpose computer vision / object recognition, and machine learning models that have been trained on microscopic images to learn features useful for microscopic image analysis, for example machine learning models that have been trained to identify variable features in a data set of microscope images. An example of the latter includes machine learning models trained in a self-supervised manner to predict consistent representations for different perturbed variants of a microscopic image, such as e.g. using the SimCLR-algorithm (for an example of this, see Chen, T., Kornblith, S., Norouzi, M., & Hinton, G.; 2020, November; A simple framework for contrastive learning of visual representations. In International conference on machine learning; pp. 1597-1607; PMLR) or momentum contrast learning (for an example of this, see He, K., Fan, H., Wu, Y., Xie, S., &

Girshick, R.; 2020; Momentum contrast for unsupervised visual representation learning. In Proceedings of the IEEE/CVF Conference on Computer Vision and Pattern Recognition; pp. 9729-9738). In embodiments where the scalar or vector of image derived features comprises one or more values quantifying an expert-defined visual feature in an image, these one or more values are typically determined as the output of a machine learning algorithm or a computer-vision algorithm that has been specifically developed or adapted to automatically quantify a visual feature that is directly interpretable and visible in the label-free image(s). This is by contrast with e.g. fluorescence pixel intensity or pixel-wise representations which are not directly interpretable at the pixel level. Such visual features may include e.g. the number of cells, the degree of confluence of the cells, the ratio and/or proportion of cells having particular cellular phenotypes, the number and/or size (in terms of number of cells, surface area, number of pixels, etc.) of groups of cells having particular phenotypes (such as e.g. islands of cells), etc. Advantageously, values quantifying an expert-defined visual feature in an image may be values that do not require the identification of single cells. In other words, the values quantifying an expert-defined visual feature in an image may be population-level features / sheet level features that quantify features associated with groups of cells. Examples of such features include the degree of confluence, the size and/or number of islands of cells, etc. These may advantageously not require the use of images that are able to distinguish single cells from each other, thereby increasing the speed of processing, the field of applicability of the method (as simple imaging equipment may be used) and the breadth of application as quantification of these features is not as limited by the density of cells in the cell sheet.

A non-invasive, non-destructive measurement process refers to a measurement process that is performed on a cell population during the process of cell culture and that does not sample, destroy or significantly damage the cell population. Thus, a non-invasive, non-destructive measurement process is compatible with cell viability, and can in particular be performed during the process of cell culture (i.e. live) without significantly interfering with the cell population or the cell state differentiation process that the cell population is undergoing. By contrast, an invasive or destructive measurement process is a measurement process that requires sampling and/or destruction of the cell population in the cell culture, or significantly damages the population. This includes measurement process that require a sampling step (i.e. where at least part of the measurement is performed on a subset of the cell population in the cell culture that is removed from the cell culture), measurement processes that dissociate and/or fix/kill the cells (such as e.g. FACS, mass cytometry, immunohistochemistry, etc.), measurement processes that cause significant damage such as e.g. extensive photobleaching (e.g. continuous / frequent fluorescence imaging, extensive confocal microscopy, etc.). For example, the process of obtaining values such as cell density or cell aggregate size in Williams et al. is an invasive and destructive measurement process as it requires the sampling of the cell culture, and the dissociation and staining of the cells.

The prediction of metrics indicative of a cell state transition in a cell population according to the methods described herein uses label-free image-derived features. In embodiments, additional predictive variables can be used including process parameters. The term "process parameter" as used herein refers to a parameter that is set by a user/operator of a process, and that characterizes how the process is run. This may include for example the identity of one or more growth factors and/or small molecules and/or nutrients used to control the cell state transition process, the timing of addition of one or more growth factors and/or small molecules and/or nutrients, the concentration of addition of one or more growth factors and/or small molecules and/or nutrients, the cell seeding density used, etc.

The prediction of metrics indicative of a cell state transition in a cell population according to the methods described herein uses a statistical model that takes as an input the label-free image-derived feature(s) (and optionally additional variables such as e.g. process parameters) and provides as an output the one or more metrics indicative of a cell state transition in the cell population. Such as statistical model may have been trained (also referred to as "fitted") using training data comprising the values of predictive variables (including but not limited to the label-free image-derived feature(s)) for one or more cell cultures and the corresponding measured values of the one or more metrics indicative of a cell state transition in the cell population to be predicted. The statistical model may be a regression model. Suitable regression models for used in the context of the present invention may depend on the type and number of the predictive and predicted variables. For example, when the predictive variable (including the label-free image-derived features) that is a scalar numerical value and the predicted variable is also a single scalar variable (metrics indicative of a cell state transition), a single linear regression (also referred to as simple linear regression) may be used. As another example, where the predictive variables include vectors of variables, linear vector-valued regression approaches may be used, such as multiple linear regression, partial least squares regression (PLS) or variants thereof such as orthogonal partial least square regression (OPLS). As another example, non-linear regression methods using a machine learning model (which may comprise a single model or an ensemble of models), such as e.g. random forest regression.

PLS is a regression tool that identifies a linear regression model by projecting a set of predicted variables and corresponding observable variables (predictors) onto a new space. In other words, PLS identifies the relationship between a matrix of predictors $X$ (dimension $mxn$) and a matrix of responses $Y$ (dimension $mxp$) as:

$$X=TP^t+E \qquad (1)$$

$$Y = UQ^t + F \qquad (2)$$

where $T$ and $U$ are matrices of dimension $mxl$ that are, respectively, the $X$ score (projections of $X$ onto a new space of "latent variables") and the $Y$ scores (projections of $Y$ onto a new space); $P$ and $Q$ are orthogonal loading matrices (that define the new spaces and respectively have dimensions $nxl$ and $pxl$); and matrices $E$ and $F$ are error terms (both assumed to be IID - independent and identically distributed - random normal variables). The scores matrix T summarises the variation in the predictor variables in $X$, and the scores matrix U summarises variation in the responses in Y. The matrix $P$ expresses the correlation between $X$ and $U$, and the matrix $Q$ expresses the correlation between $Y$ and $T$. The decomposition of $X$ and $Y$ into a matrix of scores and corresponding loadings is performed so as to maximise the covariance between $T$ and $U$. OPLS is a variant of PLS where the variation in $X$ is separated into three parts: a predictive part that is correlated to Y ($TP^t$ as in the PLS model), an orthogonal part ($T_{orth}P_{orth}t$ which captures systematic variability that is not correlated to $Y$) and a noise part ($E$ as in the PLS model - which captures residual variation). Partial least squares (PLS) and orthogonal PLS (OPLS) regression (and any other type of regression) can be used to characterise the relationship between label-free image-derived features and other optional predictor variables and metrics associated with a cell state transition process (differentiation efficiency, quality attribute, etc.). This can be performed by fitting an (O)PLS model as described above, with $X$ including the one or more label-free image-derived features that are believed to be predictive of the progress and/or outcome of the cell state differentiation process (and hence predictive of the metrics associated with a cell state transition process), and $Y$ including the corresponding metrics associated with a cell state transition process.

The term "machine learning model" refers to a mathematical model that has been trained to predict one or more output values based on input data, where training refers to the process of learning, using training data, the parameters of the mathematical model that result in a model that can predict outputs values that satisfy an optimality criterion or criteria. In the case of supervised learning, training typically refers to the process of learning, using training data, the parameters of the mathematical model that result in a model that can predict outputs values that with minimal error compared to comparative (known) values associated with the training data (where these comparative values are commonly referred to as "labels"). The term "machine learning algorithm" or "machine learning method" refers to an algorithm or method that trains and/or deploys a machine learning model. Regression models can be seen as machine learning models. Conversely, some machine learning models can be seen as regression models in that they capture the relationship between a dependent variable (the values that are being predicted) and a set of independent variables (the values that are used as input to the machine learning model, from which the machine learning model makes a prediction). Any machine learning regression model may be used according to the present invention as a statistical model to predict metrics indicative of a cell state transition process. Further, in embodiments, machine learning regression models may be trained to provide label-free image-derived features from input label-free images of a cell culture. A model that predicts one or more metrics indicative of a cell state transition may be trained by using a learning algorithm to identify a function $F$: $v, p \rightarrow moi_i$ where F is a function parameterised by a set of parameters $\theta$ such that:

$$moi_i \approx \widehat{moi}_i = F(v, p | \theta) \qquad (3)$$

where $\widehat{moi}_i$ is a predicted metric indicative of a cell state transition, v is a set of label-free image-derived features and p is an optional set of additional predictor variables such as process parameters, and $\theta$ is a set of parameters identified as satisfying equation (4):

$$\theta = argmin_\theta L(moi_i, moi_i) \qquad (4)$$

where L is a loss function that quantifies the model prediction error based on the observed and predicted specific consumption rates. Similar expressions can be provided for machine learning models that are trained to provide the value of one or more label-free image-derived features by processing label-free images. The specific choice of the function $F$, parameters $\theta$ and function $L$ as well as the specific algorithm used to find $\theta$ (learning algorithm) depends on the specific machine learning method used. Any method that satisfies the equations above can be used within the context of the present invention, including in particular any choice of loss function, model type and architecture. In embodiments, a statistical model that may be used to predict one or more metrics indicative of a cell state transition is a linear regression model. A linear regression model is a model of the form according to equation (5), which can also be written according to equation (5b):

$$Y = X\beta + \varepsilon \quad (5)$$

$$y_i = \beta_0 + \beta_1 x_{i1} + .. \beta_p x_{ip} + \varepsilon_i \quad i = 1, ..., n \quad (5b)$$

where Y is a vector with n elements yi (one for each dependent/predicted variable), X is a matrix with elements $x_{i1}..x_{ip}$ for each of the p predictor variables and each of the n dependent variables, and n elements of 1 for the intercept value, β is a vector of p+1 parameters, and ε is a vector of *n* error terms (one for each of the dependent variables).

In embodiments, a machine learning model is a random forest regressor. Random forest regressors are described in e.g. Breiman, Leo. "Random forests." Machine learning 45.1 (2001): 5-32. A random forest regressor is a model that comprises an ensemble of decision trees and outputs a class that is the average prediction of the individual trees. Decision trees perform recursive partitioning of a feature space until each leaf (final partition sets) is associated with a single value of the target. Regression trees have leaves (predicted outcomes) that can be considered to form a set of continuous numbers. Random forest regressors are typically parameterized by finding an ensemble of shallow decision trees. For example, random forests can be used to predict the value of one or more metrics indicative of a cell state transition. In embodiments, a machine learning model is an artificial neural network (ANN, also referred to simply as "neural network" (NN)). ANNs are typically parameterized by a set of weights that are applied to the inputs of each of a plurality of connected neurons in order to obtain a weighted sum that is fed to an activation function to produce the neuron's output. The parameters of an NN can be trained using a method called backpropagation (see e.g. Rumelhart, David E., Geoffrey E. Hinton, and Ronald J. Williams. "Learning representations by back-propagating errors." Nature 323.6088 (1986): 533-536) through which connection weights are adjusted to compensate for errors found in the learning process, in combination with a weight updating procedure such as stochastic gradient descent (see e.g. Kiefer, Jack, and Jacob Wolfowitz. "Stochastic estimation of the maximum of a regression function." The Annals of Mathematical Statistics 23.3 (1952): 462-466). ANNs can be used to predict the value of one or more metrics indicative of a cell state transition, or to process label-free images to obtain label-free image-derived features.

Suitable loss functions for use in regression problems or for the training of image analysis machine learning models such as those described herein include the mean squared error, the mean absolute error and the Huber loss. Any of these can be used according to the present invention. The mean squared error (MSE) can be expressed as:

$$L(\cdot) = MSE(moi_i, \widehat{moi}_i) = (moi_i - \widehat{moi}_i)^2 \quad (6)$$

The mean absolute error (MAE) can be expressed as:

$$L(\cdot) = MAE(moi_i, \widehat{moi}_i) = |moi_i - \widehat{moi}_i| \quad (7)$$

The MAE is believed to be more robust to outlier observations than the MSE. The MAE may also be referred to as "L1 loss function". The Huber loss (see e.g. Huber, Peter J. "Robust estimation of a location parameter." Breakthroughs in statistics. Springer, New York, NY, 1992. 492-518) can be expressed as:

$$L(moi_i, \widehat{moi}_i|a) = \begin{cases} 0.5(moi - \widehat{moi}_i)^2 & \text{for } |moi_i - \widehat{moi}_i| < a \\ a|moi_i - \widehat{moi}_i| - 0.5a^2 & \text{otherwise} \end{cases} \quad (8)$$

where α is a parameter. The Huber loss is believed to be more robust to outliers than MSE, and strongly convex in the neighborhood of its minimum. However, MSE remains a very commonly used loss functions especially when a strong effect from outliers is not expected, as it can make optimization problems simpler to solve. In embodiments, the loss function used is an L1 loss function. In embodiments, the loss function used is a smooth loss function. Smooth loss functions are convex in the vicinity of an optimum, thereby making training easier.

In embodiments, a machine learning model comprises an ensemble of models whose predictions are combined. Alternatively, a machine learning model may comprise a single model. In embodiments, a machine learning model may be trained to predict a single metric indicative of a cell state transition or a single label-free image-derived feature. Alternatively, a machine learning model may be trained to jointly predict a plurality of metrics indicative of a cell state transition or a plurality of label-free image-derived features. In such cases, the loss function used may be modified to be an (optionally weighted) average across all variables that are predicted, as described in equation (13):

$$L_M(moi, \widehat{moi}) = \frac{1}{n}\sum_{i \in m} \alpha_i L(moi_i, \widehat{moi}_i) \qquad (13)$$

where $\alpha_i$ are optional weights that may be individually selected for each of the metrics / features $i$, $moi$ and $\widehat{moi}$ are the vectors of actual and predicted metrics/features. Optionally, the values of $moi_i$ may be scaled prior to inclusion in the loss function (e.g. by normalizing so that the labels for all the jointly predicted variables have equal variance), for example to reduce the risk of some of the jointly predicted $\widehat{moi}_i$ dominating the training.

In embodiments, the statistical model is trained to predict one or more metrics indicative of a cell state transition at a future time (k+1), based on input values comprising the values of one or more label-free image-derived features obtained from images acquired at one or more time points $k$, $k-1$, etc. In other words, the training data that is used may be such that the model predictions based on data at one or more time points $k$, $k-1$, etc. are evaluated against known corresponding values at a time $j > k$, $k-1$,... In embodiments, the plurality of time points in the input data used for training are separated by one or more predetermined time periods (e.g. 1 hour, 2 hours, 3 hours, 12 hours, 1 day, 2 days, etc.) and/or relate to specific time points in the process (such as e.g. a medium change, a timing of addition of a particular growth factor/small molecule, etc). In a simple example, the statistical model is trained to predict one or more metrics indicative of a cell state transition at the end of a cell state transition process (e.g. after 21 days in culture) using features derived from label-free images acquired at any time point before the end of the cell transition process (e.g. before 21 days in culture, such as e.g. using data from any one or more of days 1, 2, 3, 4, 5,6,7, 10, 14, etc). In embodiments, the statistical model is trained to predict one or more metrics indicative of a cell state transition at current time point (k), based on input values comprising the values of one or more label-free image-derived features obtained from images acquired at one or more time points $k$, $k-1$, including the current time point. This may be useful when the metrics indicative of a cell state transition process are not easily measurable, for example where their measurement would alter the quality of the cell population.

The time periods (whether between input values or between input values and predicted values) may be approximately the same for the whole training data set. Alternatively, the training data may comprise sets of input values and/or input values and corresponding known (label) values that are not separated by the same time difference. For example, the training data may comprise measurements for a plurality of cell cultures, where in some of the plurality of cell cultures data was acquired every day, whereas in others, data was acquired every half day. As another example, the training data may comprise measurements for a plurality of cell cultures, where data was acquired at particular time points in the cell state process, the time points differing between at least some of the plurality of cell cultures. For example, the data may have been acquired at the time of a particular change of medium, which change may have been implemented at different times in the different cell cultures. Preferably, the training data used comprises sets of input values and corresponding label values that are acquired at the same or corresponding times. The model may advantageously be used to predict metrics using features that are associated the same or corresponding times as the timings associated with the metrics and features in the training data. For example, a model trained to predict a metrics associated with the end of a cell state transition process using features of label-free images acquired at the time of a first and second medium change may bay used to predict metrics associated with the end of a cell state transition process using features of label-free images acquired at the time of a first and second medium change.

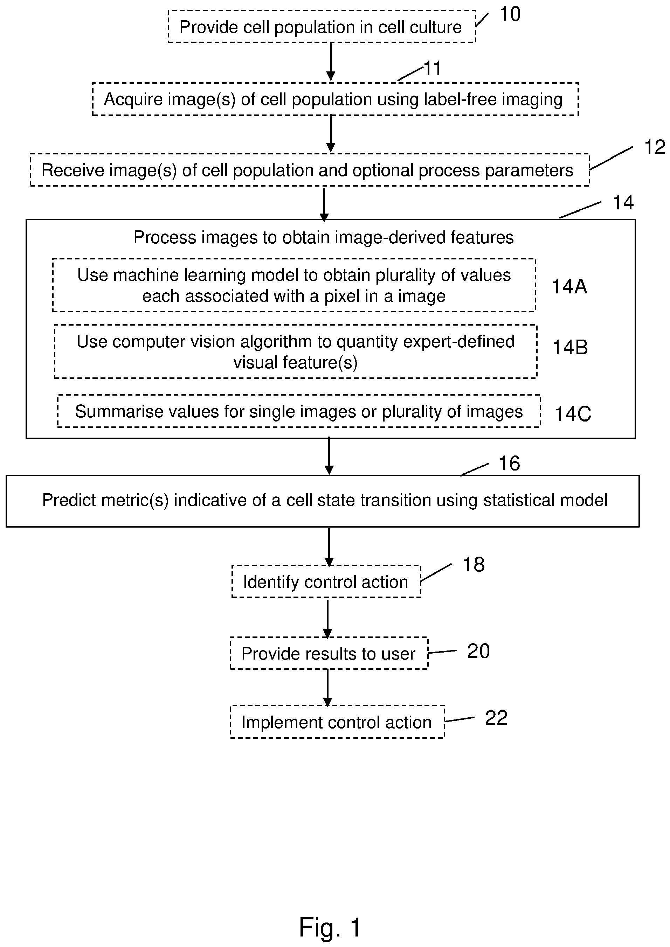

Figure 1 is a flowchart illustrating a method for monitoring a cell population in a cell culture or for controlling a cell culture or providing a cell population according to a general embodiment of the disclosure. The method may comprise optional step 10 of providing a cell population in cell culture, and optional step 11 of acquiring images of the cell population using a label-free imaging technique. Alternatively, the method may simply comprise receiving, by a computer, images of the cell population acquired using label-free imaging, and optionally one or more process parameters, at step 12. The method further comprises processing the label-free images to obtain one or more label-free image-derived features at step 14. This may comprise any of the optional step 14A of using a machine learning model to obtain a plurality of values each associated with a pixel in the label-free images, optional step 14B of using a computer vision algorithm to quantify one or more expert-defined visual features, and optional step 14C of summarising one or more of the plurality of values obtained through steps 14A and/or 14B for a single image or a plurality of images. At step 16, one or more metrics indicative of a cell state transition are predicted using a statistical model that takes as input the values obtained at step 14, and optionally one or more process parameters. At optional step 18, a control action may be identified based on the results of step 16. At step 20, the results of any of steps 14, 16 and/or 18 may be provided to a user. At step 22, a control action as identified in step 18 may be implemented.

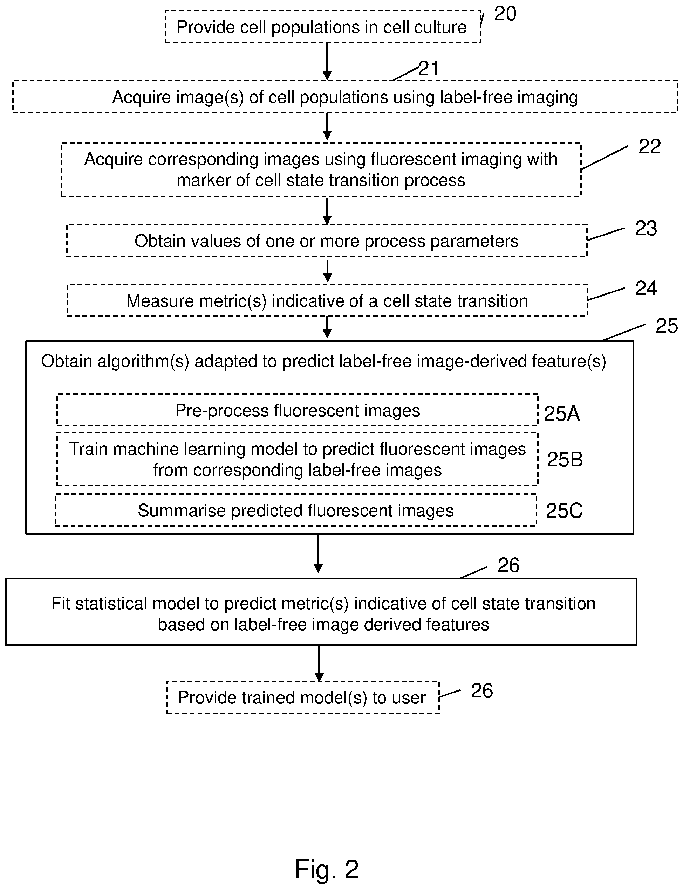

Figure 2 is a flowchart illustrating a method for providing a tool for monitoring a cell population in a cell culture according to an embodiment of the disclosure. The method may comprise optional step 20 of providing a plurality of cell populations in cell culture, and optional steps 21 to 23 of acquiring training data from the plurality of cell populations. Alternatively, the training data may have been previously acquired and may simply be received by a computer. The optional steps of acquiring training data may comprise step 21 of acquiring images of the cell populations using a label-free imaging technique, step 22 of acquiring corresponding images comprising a signal indicative of the presence of a marker associated with a stage of the cell state transition process, such as e.g. fluorescence images associated with said marker, step 23 of obtaining the values of one or more process parameters used in the cell cultures, and step 24 of measuring one or more metrics indicative of a cell state transition. At step 25, one or more algorithms adapted to predict label-free image derived features are provided. This may comprise optional step 25A of pre-processing the images obtained at step 22, optional step 25B of training a machine learning model to predict the images obtained at step 22 from the images obtained at step 21, and optional step 25C of summarising the predictions obtained at step 25B. At step 26, a statistical model is fitted using the values from step 25 (and optionally step 23) to predict the values obtained at step 24. At optional step 26, the statistical model obtained at step 26 and optionally the algorithm(s) obtained at step 25 are provided to a user.

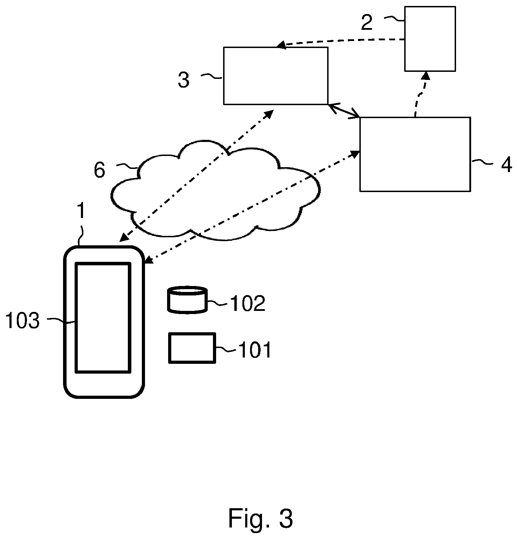

**Figure 3** illustrates schematically an exemplary system according to the disclosure. The system comprises a computing device 1, which comprises a processor 101 and computer readable memory 102. In the embodiment shown, the computing device 1 also comprises a user interface 103, which is illustrated as a screen but may include any other means of conveying information to a user such as e.g. through audible or visual signals. In the illustrated embodiment, the computing device 1 is operably connected, such as e.g. through a network 6, to a cell culture system comprising a cell culture housing 2, one or more sensors 3, and one or more effectors 4. The cell culture housing may be an incubator or any other kind of housing suitable for live cell culture in a culture dish. The cell culture system may be an integrated system comprising a cell culture housing and at least one sensor, such as e.g. an Incucyte™ live-cell analysis system. The computing device may be a smartphone, tablet, personal computer or other computing device. The computing device is configured to implement a method for monitoring a cell population in a cell culture, as described herein. In alternative embodiments, the computing device 1 is configured to communicate with a remote computing device (not shown), which is itself configured to implement a method of monitoring a cell population in a cell culture, as described herein. In such cases, the remote computing device may also be configured to send the result of the method of monitoring a cell population in a cell culture to the computing device. Communication between the computing device 1 and the remote computing device may be through a wired or wireless connection, and may occur over a local or public network such as e.g. over the public internet. Each of the sensor(s) 3 and optional effector(s) 4 may be in wired connection with the computing device 1, or may be able to communicate through a wireless connection, such as e.g. through WiFi, as illustrated. The connection between the computing device 1 and the effector(s) 4 and sensor(s) may be direct or indirect (such as e.g. through a remote computer). In alternative embodiments, the computing device 1 is configured to implement a method for monitoring a cell population in a cell culture, as described herein, using images and optional process parameters received from a data store or remote computing device (such as e.g. a computing device associated with the cell culture system). Thus, the computing device 1 may not be directly connected to the cell culture system. In such embodiments, the computing device 1 may provide results of the methods for monitoring a cell population in a cell culture as described herein to a remote computing device or data store. When the results are provided to a remote computing device directly or indirectly associated with the cell culture system, the results may be used by the remote computing device to implement a control action, for example by determining a control action to be implemented based on the results and/or to control the one or more effectors 4 to implement the control action. Similarly, when the computing device 1 is connected to the cell culture system, the computing device 1 may be configured to determine a control action based on the results of the methods for monitoring a cell population in a cell culture, and to control one or more effectors 4 to implement the control action. The one or more sensors 3 comprise at least one sensor configured to acquire label-free images of one or more cell population(s) in the cell culture housing (such as e.g. a phase contrast microscope, bright-field microscope, Taman microscope, etc.). The sensors 3 may further comprise at least one sensor configured to acquire labelled images of the one or more cell population(s) in the cell culture housing (such as e.g. a fluorescence microscope). The sensors 3 may further comprise at least one sensor configured to measure a metric indicative of a cell state transition, such as e.g. a sensor configured to measure the proportion of cells with a particular characteristic in the cell population (e.g. a FACS machine). The one or more effectors 4 may be configured to control one or more process parameters of the cell culture process being performed in the cell culture housing 2. The measurements from the sensors 3 are communicated to the computing device 1, which may store the data permanently or temporarily in memory 102. The computing device memory 102 may store a statistical model and optionally a trained machine learning model as described herein. The processor 101 may execute instructions to predict one or more label-free image derived features using the trained machine learning model, and to predict one or more metrics indicative of a cell state transition process, and/or to provide a tool for monitoring a cell population as described herein (such as e.g. by training a machine learning model to process label-free images and/or fitting a statistical model to predict metrics indicative of a cell state transition process), using the data from the one or more sensors 3, as described herein (such as e.g. by reference to Figure 1 or Figure 2).

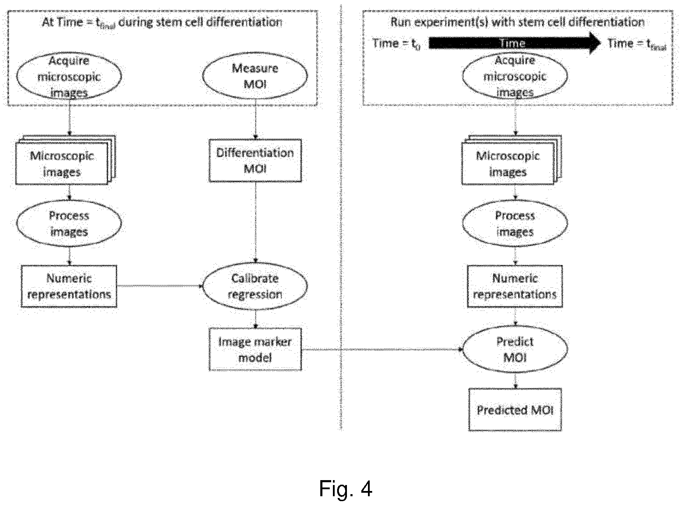

**Figure 4** is a flowchart illustrating a method of providing a tool for monitoring a cell population in a cell culture (left of the vertical dashed line) and a method of monitoring a cell population in a cell culture (right of the vertical line), according to an embodiment of the disclosure. During the set-up / calibration phase (left of the vertical dashed line), training data is acquired comprising at least label-free images of a cell population undergoing a cell state transition (e.g. stem cell differentiation, in the illustrated embodiment) in cell culture, and the values of one or more measured metrics of interest (i.e. metrics indicative of a cell state transition). In the illustrated embodiment, both the images and the metric of interest are acquired at the end of the cell state transition process ($t_{final}$). This may be useful to replace end-point quantification of the metric(s) of interest when monitoring a cell culture. In another embodiment, the one or more label-free images are acquired at a time point earlier than the time point at which the metric(s) of interest is measured. This may be useful for the prediction of the metric(s) of interest (e.g. end-point metrics) ahead of time, when monitoring a cell culture, for example in order to be able to implement responsive control. In another embodiment, a plurality of label-free images are acquired at a plurality of time points which may or may not include the time point at which the metric(s) of interest is measured. Such a sequence of images may enable both the replacement of end-point quantification of the metrics of interest and the predictive monitoring. The metric(s) of interest (MOIs) may be measured using an invasive technique such as FACS (fluorescence activated cell sorting), which requires that the whole sample is used for measurement. Indeed, the MOIs are only measured for the training data and in the deployment phase (see below), predicted values obtained using only non-invasive and non-destructive technologies are used to replace / pre-empt the need for such invasive measurement steps. The microscopic images are then processed into a numeric representation, i.e. they are processed to obtain one or more label-free image-derived features. These are used together with the measured MOIs to calibrate a regression model to predict the MOI of a cell culture based on the numeric representations. The resulting model is then provided to a user for use in the deployment / application phase, where it can be used to monitor a cell population in a cell culture. This phase uses the calibrated regression model to predict the MOIs based on label-free images acquired for a cell population to be monitored, thereby removing the need for the MOIs to be measured. The deployment phase may comprise the step of acquiring one or more label-free images of the cell population during the cell culture, while the cell population is undergoing the cell state transition for which the method was developed in the calibration phase (in the illustrated embodiment this is a stem cell differentiation). The cell sate transition may occur in culture between a time to and a time $t_{final}$, corresponding to the time at which an outcome of the cell state transition process may be assessed such as e.g. through one or more MOIs. The images may be acquired at the same or corresponding time points as the images used in the calibration phase. The images may be acquired using the same label-free imaging technology, although this is not a requirement of the method. The images are then processed using the same methods used in the calibration phase, to obtain corresponding numeric representations for the images (i.e. values of one or more label-free image-derived features). The calibrated regression model obtained in the calibration phase is then used to predict the MOIs based on the numeric representations.

The methods described herein find application in a variety of context. For example, the methods described herein can be used to predict the efficiency of a cell state transition process (e.g. stem cell differentiation) using label-free live cell imaging, thereby enabling non-invasive and real time monitoring. When the prediction is performed at the end of the cell state transition, the methods remove the need of using invasive analysis processes that involve the addition of chemical dyes or inclusion of additional genetic manipulation to the cells, the use of destructive techniques and instruments (e.g. FACS) or the use of wavelengths and intensities of light that might impact on the cell health or biochemistry (e.g. phototoxicity) to quantify efficiency. Further, where metrics other than efficiency are predicted or where metrics are predicted at an earlier time point than end-point, the predictions may inform control decisions (e.g. timing or concentration of added growth factors) to improve the expected outcome of the cell state transition. These advantages apply to various contexts including but not limited to: (i) when studying cell state transition processes involving a change in cell physiology and/or behaviour, where it is important that there is no confounding impact from energies or wavelengths of light or impact on the biochemistry from added chemical dyes or reagents, (ii) where quality control requires objective measurement for use of the cells for standardized cell-based assessment and measurement procedures (e.g. toxicity assays, drug screening, drug discovery), or (iii) where specific cell types are produced through a cell state transition (such as differentiation, e.g. when obtaining cardiomyocytes from human iPSCs) for therapy and transplantation where addition of chemical dyes or genetic modifications merely for monitoring the production process impacts on the risk to the receiving patient.

The following is presented by way of example and is not to be construed as a limitation to the scope of the claims.

## *Examples*

Exemplary methods of monitoring a cell culture will now be described. In particular, the examples below demonstrate the use of the methods of the invention to predict cardiomyocyte differentiation efficiency of induced pluripotent stem cells (iPSCs) in culture, directly from label-free microscopic images.

## *Materials and Methods*

*Cell culture and differentiation.* The experiment protocol used for all differentiation follows the small molecules protocol published by Campostrini et al. (Nature Protocols 16.4 (2021): 2213-2256), see pages 2220-2222 (see in particular the step-by-step protocol on pages 2234 to 2239 of this reference). All cell cultures were performed in an Incucyte™ S3, for 21 days.

*Fluorescence images.* When fluorescence images were used, these were acquired using a reporter cell line with GFP-tagged NKX2-5 (NK2 Homeobox 5, NCBI Entrez Gene ID: 1482). The cell line was differentiated at different seeding densities (25k, 45k, 50k, 65k, 75k, 85k, 100k, 105k, 125k, 150k, 200k, 250k, 300k) in 12-well format plates. A total of 4947 pairs of phase contrast and GFP fluorescence images were acquired as 9 pairs per well hourly in the Incucyte™ S3 from day 0 to 21 of the experimental protocol. All images were acquired at 10x magnification. The field of view for each image was 4.34 x 3.25 mm. The total field of view per well was approximately 127 mm$^2$. Images were acquired according to the scan pattern automatically determined by the Incucyte™ apparatus.

*Pre-processing of fluorescence images.* This process is illustrated on **Figure 5B.** Prior to being used, the fluorescence light microscopy (FLM) images were pre-processed by first clipping the intensity between a min and max threshold to eliminate noise and increase contrast between background and signal as possible. In this example, the min and max thresholds were set manually by inspection of the images used for training of the model. The min threshold was set to a value that was found to eliminate most background signal on manual inspection. The max threshold was set to cap the dynamic range of intensities. These thresholds may be automatically set based on the distribution of pixel-wise intensities, for example by selecting values that exclude defined percentiles of the distribution. Fluorescent intensities are typically log-normal meaning that a very small number of pixels will have very large values compared to rest, which causes all types of issues during model training. Capping the max intensities makes it more stable. The FLM images were then normalized between min and max threshold to get values between 0 and 1 (by linear scaling).

*Training of machine learning model for fluorescence image prediction.* This process is illustrated on **Figure 5A.** An artificial neural network (ANN) model was trained to perform pixel-wise fluorescence image prediction of NKX2.5.GFP. The pairs of phase contrast and GFP fluorescence images (all time points) were used for training, keeping 15% of the pairs to monitor training. The model used was OSA-U-Net, an ANN based on U-Net (Ronneberger, Olaf, Philipp Fischer, and Thomas Brox. "U-net: Convolutional networks for biomedical image segmentation." International Conference on Medical image computing and computer-assisted intervention. Springer, Cham, 2015). The OSA U-Net uses a one-step aggregation (OSA) module (see Figure 3c, Lee, Youngwan, and Jongyoul Park. "Centermask: Real-time anchor-free instance segmentation." Proceedings of the IEEE/CVF conference on computer vision and pattern recognition. 2020) identity mapping, and efficient squeeze-and-excitation for channel-wise attention instead of the standard U-Net convolutional blocks. The ANN was trained to minimize the difference between the measured and predicted FLM images weighted by the smooth-L1 loss function, with beta= 0.5. The Adam optimizer (Kingma, Diederik P., and Jimmy Lei Ba. "Adam: A method for stochastic gradient descent." ICLR: International Conference on Learning Representations. 2015) and a learning rate of $10^{-4}$ were used, the model being trained until validation performance stopped improving (22 epochs).

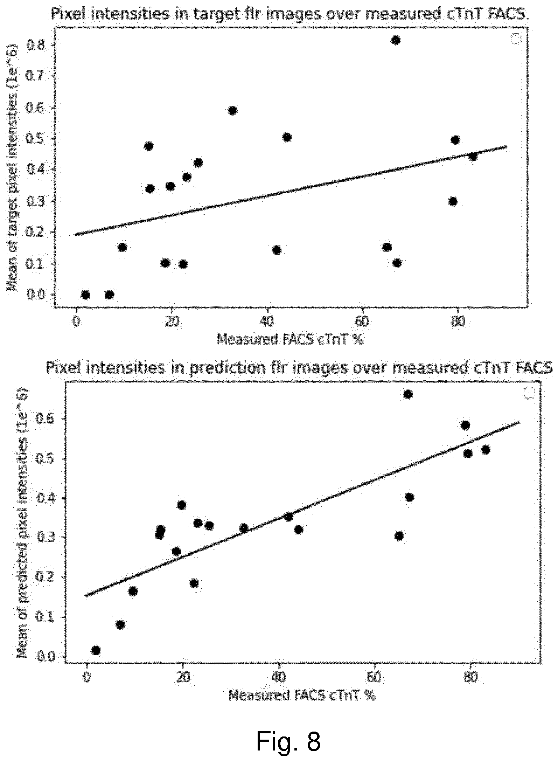

*FACS validation of NKX2.5-GFP signal.* To validate the models predicting GFP signal, the predicted NKX2.5.GFP signal was compared to the percentage of GFP and cTnT-positive (cardiac troponin T) cells as determined by FACS collected at the last time point of experiment (day 21). The predicted NKX2.5.GFP is reported as the average predicted pixel intensity across all images acquired from a single well at a given time point. The models were validated on data from the same cell line used for training, FACS GFP data was acquired in eight consecutive small experiments respectively comprising 3, 2, 2, 2, 4, 4, 3 and 5 wells (results on Figure 7A), and FACS cTnT data was acquired in seven consecutive small experiments respectively comprising 3, 2, 2, 2, 4, 4 and 2 wells (results on Figure 8). The predicted NKX2.5.GFP was also correlated to the percentage cTnT-positive cells from another iPSC cell line, without the NKX2.5.GFP construct, which was differentiated in three consecutive experiments including 7, 2 and 6 wells respectively (results on Figure 9).

*Expert-defined label-free image features.* Example 2 demonstrates image-based prediction of differentiation efficiency based on expert-provided features at earlier times by extracting three types image-based features. The following features were calculated: (i) the confluence (%) at the time of medium change 3, (ii) the presence of dense colonies (binary 0-1) at the time of medium change 3, and (iii) the presence of "islands" at the time of medium change 2 (number of islands as well as average size and sum of all island sizes in pixels). By "islands" it is meant that following medium change 1, cells contract from a confluent monolayer to localized dense colonies (see Figure 10 for an example). The confluence was calculated by: using a computer vision algorithm to separate cell mass from background (in this case, an ANN-based algorithm); and calculating the % of non-background pixels to obtain the confluence (%). The dense colonies were detected manually as a proof of principle. However, the same task can be performed using an object detection algorithm trained to detect such colonies, for instance an ANN-based algorithm such as YOLO (Redmon, Joseph, et al. "You only look once: Unified, real-time object detection." Proceedings of the IEEE conference on computer vision and pattern recognition. 2016) or DetectoRS (Qiao, Siyuan, Liang-Chieh Chen, and Alan Yuille. "Detectors: Detecting objects with recursive feature pyramid and switchable atrous convolution." Proceedings of the IEEE/CVF Conference on Computer Vision and Pattern Recognition. 2021). Such algorithms can be trained to detect colonies in images using a colony detection training data set where colonies are manually annotated with their location and size. The islands were detected based on the confluence detected as explained above, where an island was defined as a localized confluent area with an area between a min and max-threshold. The min and ma thresholds were chosen to be larger than debris, and smaller than patches of confluent monolayer, respectively. The area thresholds were determined by inspecting a large set of images to find a set of thresholds that reflect expert assessment.

*Process parameters.* Example 2 investigates the use of process parameters as additional predictors in combination with label-free image derived features. The process parameters were chosen as parameters related to the concentration of addition of growth factor/small molecule addition and cell seeding density. A total of 7 factors of the experimental protocol for differentiation (Campostrini et al. 2021) were varied according to a resolution IV fractional factorial design as given by MODDE™ 12.1 (Sartorius Stedim Data Analytics AB). The investigated factors included: (i) seeding density (100-150-200k cells), (ii) concentration of Chir (2-5-8 $\mu$M) (CHIR99021, a GSK3 inhibitor) or the square thereof, (iii) concentration of IWP (0.02-0.25-2.5$\mu$M) (IWP-2, a WNT pathway inhibitor), (iv) concentration of XAV (2-5-8 $\mu$M) (XAV-939, a Wnt/$\beta$-catenin signaling inhibitor), (v) timing for additions for the first medium change (12-24-36h after seeding), (vi) timing for additions for the second medium change (36-48-60h after first medium change), and (vii) timing for additions for the third medium change (24-48-72h after second medium change). Levels used for design specified within parentheses. Apart from the different factor levels, the same experimental protocol as above was used meaning that the cell cultures were monitored in an Incucyte™ over the course of 21 days.

*Prediction of differentiation efficiency from expert-defined label-free image features and process parameters.* A single component OPLS regression-model (J. Trygg, S. Wold. "Orthogonal projections to latent structures (O-PLS)." Journal of Chemometrics: A Journal of the Chemometrics Society 16.3 (2002): 119-128) was fitted between the image-based features and the concentration of growth factors/small molecules and seeding density to predict the percentage of cTnT-positive cells as determined by FACS at day 21. OPLS was performed using Simca™ 17 (Sartorius Stedim Data Analytics AB).

### Example 1 - Prediction of differentiation efficiency using fluorescence image prediction

In this example, the inventors demonstrate how an embodiment of the invention can be used to quantify cardiomyocyte differentiation efficiency directly from label-free microscopic images, in this case phase contrast images.

The example relates to the prediction of a metrics indicative of cell-state transition in a culture of iPSC-cells differentiating into cardiomyocytes. The metric of interest to be predicted is the percentage of cells at the end of the differentiation process that are cardiomyocytes (also referred to in this example as differentiation efficiency). This was quantified by FACS measurements of cardiac troponin T-positive cells. The differentiation efficiency was predicted from a label-free image derived feature which was obtained by predicting a signal indicative of the presence of the fluorescent marker of NKX2.5, whose expression correlates to cardiomyocyte formation, solely from phase contrast images. This signal was predicted by an image processing ANN developed and trained for this purpose.

To train the image processing ANN, the inventors used a reporter cell line carrying a GFP-marker for NKX2.5. They trained a convolutional neural network (CNN) called OSA-U-Net to predict fluorescent light microscopic (FLM)-images depicting the expression GFP-labelled NKX2.5 based on corresponding phase contrast images. The FLM images were pre-processed prior to use in training the network, in order to increase the signal-to-noise ratio. The ANN was trained to minimize the difference between the measured and predicted FLM images. **Figure 6A** shows an example of a phase contrast image (left), corresponding pre-processed FLM image (middle), and predicted output from the trained model taking as input just the phase contrast image (right). As can be seen on **Figure 6B,** the trained ANN was able to successfully predict the NKX2.5-GFP signal (linear regression R2 = 69 % when comparing image-wise sums of predicted vs measure pixel intensities).

The data on Figure 6B indicates that the machine learning model may have overestimated the fluorescent intensities relative to the measured ones. Looking at this in more detail, the inventors identified that this seems to be due to a low signal to noise ratio (SNR) in certain images. For low SNR images, the signal disappears during pre-processing, but the network still found the morphologies indicative of NKX2.5-GFP expression (see Example on **Figure 7B).** This indicates that these overestimated predictions may be due to label error rather than prediction error. In other words, this indicates that some genuine biological signal that is lost in the FLM can actually be identified by the trained machine learning model in the phase contrast images.

To verify this hypothesis, the inventors compared the predicted NKX2.5 signal from the ANN and the measured NKX2.5 signal from the FLM images (both as a mean of pixel intensities over multiple images acquired from the same well) to NKX2.5-GFP values from FACS measurements (% positive cells), using the data at day 21 for both the imaging and the FACS. Note that FACS data can only be available at the very last time point of a differentiation experiment as the technique is destructive. They found that the predicted intensities correlate better to FACS measurements than the measured value (linear regression R2 = 41 % and R2 = 77% respectively to predict FACS-measurements of NKX2.5-GFP, see **Figure 7A).** Thus, this data confirms that the prediction of a signal indicative of NKX2.5 expression from phase-contrast images is a better indicator of true NKX2.5 levels than the fluorescence intensity measured by FLM, due to the latter being influenced by low signal-to-noise ratio.

The final goal of the method in this example was to predict the differentiation efficiency (% cTnT-positive cells) using only a label-free image-derived feature. The label-free image-derived feature that was used was the mean of predicted pixel intensities over multiple images acquired from the same well at the same time point (9 images / well / time point), where the predicted pixel intensities were obtained from an ANN trained to predict a signal indicative of NKX2.5 expression. Thus, a linear regression model was fitted between the differentiation efficiency (percentage cTnT-positive cells as measured by FACS at day 21) as predicted variable, and the above label-free image-derived feature (predicted from phase-contrast images also acquired at day 21). The results of this are shown on Figure 8 which shows (bottom plot) that such a linear model is able to accurately predict the differentiation efficiency ($R^2$=67%). By comparison, a similar linear model using the FLM-derived mean of pixel intensities over multiple images acquired from the same well at the same time point was not able to predict the differentiation efficiency as accurately ($R^2$=15%).

As a final validation of the approach, the inventors used the trained ANN to predict differentiation efficiency in experiments involving a different cell line which did not carry the GFP-reporter (and for which no FLM or GFP-FACS data could therefore be acquired). Using the trained ANN, they predicted the corresponding signal indicative of NKX2.5 expression using phase contrast images of the new cell line, then obtained a label-free image-derived feature from this (mean of predicted pixel intensities over multiple images acquired from the same well at the same time point). They then fitted a linear regression model between this label-free image-derived feature and the measured differentiation efficiency (FACS-measured cTnT). They found that this linear model was able to accurately predict differentiation efficiency ($R^2$ = 76 %, see Figure 9).

Thus, this data demonstrates that metrics indicative of a cell state transition (in this case differentiation efficiency at the end of an iPSC to cardiomyocyte differentiation process) can be accurately predicted from label-free image-derived features (in this case a signal indicative of NKX2.5 expression predicted solely from phase contrast images of the cell population using an ANN trained for this purpose). The data further demonstrates that the model trained to determine the label-free image-derived features is able to provide informative features for different cell lines (i.e. it is transferrable), and that it is does not suffer from the same noise problems as using FLM images (which further suffer from limitations associated with the need for a fluorescent reporter).

*Example 2 - Prediction of differentiation efficiency using expert-defined image **features and process parameters***

In this example, the inventors demonstrate how an embodiment of the invention can be used to quantify cardiomyocyte differentiation efficiency from label-free microscopic images, in this case phase contrast images, in combination with process parameters (in this case the timing and concentration of addition of differentiation factors).

In particular, a combination of seven process parameters (see Methods) and three expert-defined label-free images-derived features (see Methods) were used as predictor variables in this example. Both types of features related to time points that precede the time point at which the differentiation efficiency was measured. In particular, the label-free images-derived features were quantified at the time of medium changes 2 and 3. Expert-defined image features are high-level features of a cell population that the inventors hypothesised may be predictive of differentiation efficiency if they were quantified in label-free images.

A total of 10 predictive features were tested:

(a) 5 process parameters: concentrations of Chir, square of the concentrations of Chir, IWP, and XAV, and seeding density, and
(b) 5 label-free image-derived features: confluence (%) and presence of dense colonies (binary 0-1) at the time of medium change 3 and presence of "islands" at the time of medium change 2 (number of islands as well as average size and sum of all island sizes in pixels). To correlate these features to differentiation efficiency, a single component OPLS regression-model was fitted between the image-based features described above, seeding density and growth factor concentrations to predict the percentage of cTnT-positive cells as determined by FACS at day 21. The square of the concentration of Chir was included as a parameter because the inventors noted a non-linear relationship between the concentration of Chir and the response. They further found that including this term led to better models (i.e. models providing more accurate predictions). The seeding density parameter was pruned from at least some of the models tested because it was not found to be predictive in the particular set up tested. Even though it is expected that seeding density should have a non-negligible impact on efficiency, the inventors believe that the range of density investigated in this particular DOE may have been too narrow to allow for a significant contribution. Thus, the inventors expect that in other datasets exploring a larger range of seeding densities, an effect of seeding density would likely be significant.

Although these process parameters were variable in the data, the timing of media changes was not used in the predictive model. This is in order to replicate a situation where the optimal timing of addition of various factors is to be determined rather than defined in a fixed timing schedule. Indeed, in practice the use of different cell lines may lead to different results (differentiation efficiency) using the same fixed timing schedule, and different optimal timing schedules may be appropriate for different cell lines.

Without any explicit information on time, the regression model showed promising prediction performance (see Figure 11, Q2=61%) indicating the value of expert-crafted features for determination of differentiation efficiency. Analysis of the OPLS regression coefficients (see Figure 12) show that these features have great contribution, especially the confluence and presence of dense colonies at the time of medium change 3.

Thus, this data demonstrates that label-free image-derived features can be used to predict differentiation efficiency, that the combination with process parameters such as the concentration of some factors added in the differentiation process may contribute to this prediction, and that predictor variables that relate to time points during a differentiation process are able to predict the outcome of the differentiation process (at the final time point). Thus, this data demonstrates that the methods described herein can be used for controlling a cell culture process, for example by implementing corrective actions or determining the timing of addition of certain factors that optimize the outcome of the cell culture through their impact on a metric indicative of a cell state transition to be optimized.

*Equivalents and Scope*

All documents mentioned in this specification are incorporated herein by reference in their entirety.

Unless context dictates otherwise, the descriptions and definitions of the features set out above are not limited to any particular aspect or embodiment of the invention and apply equally to all aspects and embodiments which are described.

"and/or" where used herein is to be taken as specific disclosure of each of the two specified features or components with or without the other. For example "A and/or B" is to be taken as specific disclosure of each of (i) A, (ii) B and (iii) A and B, just as if each is set out individually herein.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about" or "approximately", it will be understood that the particular value forms another embodiment. The terms "about" or "approximately" in relation to a numerical value is optional and means for example +/- 10%.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

Other aspects and embodiments of the invention provide the aspects and embodiments described above with the term "comprising" replaced by the term "consisting of" or "consisting essentially of', unless the context dictates otherwise.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

**Claims**

1. A method for monitoring a cell population in cell culture, the method including the steps of:

obtaining one or more images of the cell population acquired using label-free imaging during the cell culture process, wherein the label-free imaging is an imaging technology that provides information about the spatial configuration of cells, cell structures, or groups of cells,

processing the one or more images to obtain one or more label-free image-derived features,

predicting one or more metrics indicative of a cell state transition in the cell population using a statistical model that takes the label-free image-derived features as inputs and provides the one or more metrics indicative of a cell state transition in the cell population as outputs, wherein metrics indicative of a cell state transition in the cell population are metrics that characterise the progress and/or outcome of a cell state transition process occurring in a cell population,

wherein the inputs of the statistical model do not include any feature obtained using an invasive or destructive measurement process.

2. The method of claim 1, wherein the cell state transition is a differentiation, a de-differentiation, a transition from non-mobile to mobile, a cell activation, a change in the physiological processing capacity or a transition from non-senescent cell to senescent cell, optionally wherein the cell population is a population of pluripotent cells and the cell state transition is a differentiation.

3. The method of any preceding claim, wherein the one or more metrics indicative of a cell state transition in the cell population are selected from: metrics that are indicative of the progress of a cell state transition, metrics that are indicative of the efficiency of the cell state transition, and metrics that are indicative of the quality of the cell population for a particular purpose;

optionally wherein metrics that are indicative of the progress of a cell state transition are selected from the identification of a stage in a cell state transition process, the percentage, proportion or number of cells in each of one or more stages of a cell state transition process, and the percentage, proportion or number of cells in each of one different cell state transition processes; and/or wherein metrics that are indicative of the efficiency of the cell state transition are selected from the number, percentage or proportion of cells that have reached a desired state of a cell state transition process; and/or wherein metrics that are indicative of the quality of the cell population for a particular purpose are selected from the percentage, number or proportion of cells that have one or more characteristics associated with the cell state transition process that make them suitable for a particular use.

4. The method of any preceding claim, wherein the one or more metrics indicative of a cell state transition in the cell population are associated with the final stage of the cell state transition and/or the end of the cell culture, and/or wherein the one or more label-free image-derived features are obtained by processing label-free images acquired prior to the end of the cell culture, and/or wherein the one or more label-free image-derived features are obtained by processing label-free images acquired at a single time point or a plurality of time points.

5. The method of any preceding claim, wherein processing the one or more images to obtain one or more label-free image-derived features do not include identifying single cells in the one or more images, and/or wherein processing the one or more images to obtain one or more label-free image-derived features comprises using an image analysis algorithm to quantify the one or more label-free image-derived features for the one or more images, and/or wherein each label-free image derived feature comprises one or more numerical values, and/or wherein processing the one or more images to obtain one or more label-free image-derived features comprises combining one or more numerical values each associated with a respective one of a plurality of images, and/or wherein processing the one or more images to obtain one or more label-free image-derived features comprises combining a plurality of numerical values associated with the same image.

6. The method of any preceding claim, wherein each label-free image-derived feature is selected from: (i) a label-free image-derived feature comprising a plurality of values each associated with a pixel in an image, or a summarised value derived therefrom, and (ii) a label-free image-derived feature comprising one or more values quantifying an expert-defined visual feature in an image, or a summarised value derived therefrom.

7. The method of any preceding claim, wherein processing the one or more images to obtain one or more label-free image-derived features comprises using a trained machine learning model to obtain a plurality of values each associated with a pixel in an image, optionally wherein the trained machine learning model is selected from: a machine learning model that has been trained in a supervised manner to predict one or more signals associated with one or more markers of interest, a machine learning model that has been trained to learn a general-purpose feature representation of images for image recognition, a machine learning model that has been trained on microscopic images to learn features useful for microscopic image analysis, and a machine learning model that has been trained to identify variable features in a data set of microscope images.

8. The method of claim 7, wherein the trained machine learning model is a machine learning model that has been trained in a supervised manner to predict one or more signals associated with one or more markers indicative of a stage of a cell state transition,
optionally wherein the machine learning model has been trained to predict one or more signals associated with respective labels indicative of the presence of the respective marker, and/or wherein the machine learning model has been trained to predict one or more labelled images based on an input label-free image, the labelled images showing one or more signals associated with one or more markers indicative of a stage of a cell state transition.

9. The method of any preceding claim, wherein processing the one or more images to obtain one or more label-free image-derived features comprises using a computer vision algorithm to obtain one or more values quantifying an expert-defined visual feature in the one or more images, optionally wherein the expert-defined visual feature is a feature that is directly interpretable and visible in the label-free images, and/or wherein the expert-defined visual feature is a population-level feature and/or wherein the expert-defined visual feature is selected from: the number of cells, the degree of confluence of the cells, the ratio and/or proportion of cells having particular cellular phenotypes, one or more values associated with the general structure and morphology of the cell layer, and the number and/or size of groups of cells having particular phenotypes.

10. The method of any preceding claim, wherein the label-free imaging is non-fluorescent label-free imaging, and/or wherein the label-free imaging technology is optical microscopy, Raman microscopy, optical coherence tomography, quantitative phase imaging, ptychography, photo-acoustic microscopy, optionally wherein the optical microscopy is phase contrast microscopy or brightfield microscopy.

11. The method of any preceding claim, wherein the statistical model used to predict the one or more metrics indicative of a cell state transition in the cell population further takes as inputs the values of one or more process parameters, wherein a process parameter is a predetermined value that characterises how the cell culture process is run, optionally wherein the one or more process parameters are selected from: the identity of one or more growth factors and/or small molecules and/or nutrients used to control the cell state transition process, the timing of addition of one or more growth factors and/or small molecules and/or nutrients, the concentration of addition of one or more growth factors and/or small molecules and/or nutrients, the cell seeding density, or any value derived therefrom.

12. The method of any preceding claim, wherein the statistical model is a regression model and/or wherein the statistical model has been obtained by training a statistical model to predict the one or more metrics indicative of a cell state transition based on inputs including the label-free image-derived features,
optionally wherein the statistical model is a linear regression model or a non-linear regression model and/or wherein the statistical model is selected from a simple linear regression model, a multiple linear regression model, a partial least square regression model, an orthogonal partial least square regression, a random forest regression model, a decision tree regression model, a support vector regression model, and a k-nearest neighbour regression model, and/or wherein the statistical model has been obtained by training a statistical model to predict the one or more metrics indicative of a cell state transition based on inputs including the label-free image-derived features using training data comprising the values of the label-free image-derived features determined for a plurality of cell cultures and the corresponding values of the one or more metrics indicative of a cell state transition, optionally wherein the corresponding values of the one or more metrics indicative of a cell state are measured values or metrics derived from measured values for the cell cultures from which the label-free image-derived features were determined.

13. A method of providing a tool for monitoring a cell population in cell culture, the method including the steps of:

(i) obtaining a training data set comprising:

one or more label-free images of a plurality of cell populations undergoing a cell state transition in cell culture, or the values of one or more label-free image-derived features obtained by processing said images, wherein the label-free images have been acquired using an imaging technology that provides information about the spatial configuration of cells, cell structures, or groups of cells, ;
corresponding values of one or more metrics indicative of the cell state transition, wherein the values are measured values or values or values derived from measured values, and wherein the metrics indicative of the cell state transition characterise the progress and/or outcome of the cell state transition; and
optionally, the value(s) of one or more process parameters, wherein a process parameter is a predetermined value that characterises how the cell culture process is run;
optionally, one or more labelled images corresponding to the label-free images;

(ii) obtaining an image analysis algorithm adapted to process label-free images to obtain the one or more label-free image-derived features, optionally using the one or more labelled images corresponding to the label-free images; and

(iii) providing a statistical model that predicts the values of the one or more metrics indicative of a cell sate transition in the training data using inputs comprising the one or more label-free image-derived features from the training data and optionally the values of one or more process parameters in the training data, wherein the inputs of the statistical model do not include any feature obtained using an invasive or destructive measurement process; optionally wherein the method further comprises one or more of: providing the statistical model to a user, data storage device or computing device, providing the image analysis algorithm to a user, data storage device or computing device, and/or

wherein obtaining a training data set comprises identifying one or more metrics indicative of a cell state transition process that characterise the progress and/or outcome of the particular cell state transition process, identifying one or more label-free image-derived features that are predictive of one or more metrics indicative of a cell state transition process, identifying one or more process parameters that are predictive of one or more metrics indicative of a cell state transition process, acquiring the one or more images of the cell culture using a label-free imaging technique, acquiring the one or more corresponding labelled images, measuring the corresponding values of one or more metrics indicative of the cell state transition or values from which such metrics can be derived, and culturing the plurality of cell populations.

14. A method of providing a cell population that has undergone a cell state transition, the method comprising:

culturing a cell population in conditions suitable for the cells to undergo the cell state transition; and
monitoring the cell population using the method of any of claims 1 to 12;
optionally wherein the method further comprises implementing one or more control actions based on the predicted metrics indicative of a cell state transition, optionally wherein the control action is selected from: addition of a compound or composition to the cell culture, change of the liquid medium in the cell culture, modifying a scheduled time and/or concentration of addition of a compound or composition to the cell culture.

15. A system for monitoring a cell culture and/or for providing a tool for monitoring a cell culture and/or for providing a cell population that has undergone a cell state transition and/or for controlling a cell culture, the system comprising:

at least one processor; and
at least one non-transitory computer readable medium containing instructions that, when executed by the at least one processor, cause the at least one processor to perform the method of any of claims 1 to 14;
optionally wherein the system comprises one or more of: a cell culture environment (such as e.g. an incubator), one or more sensors (such as e.g. one or more label-free imaging devices), and one or more effectors (such as e.g. one or more liquid handling systems).

Provide cell population in cell culture ⌐ 10

Acquire image(s) of cell population using label-free imaging 11

Receive image(s) of cell population and optional process parameters 12

Process images to obtain image-derived features 14

Use machine learning model to obtain plurality of values each associated with a pixel in a image 14A

Use computer vision algorithm to quantity expert-defined visual feature(s) 14B

Summarise values for single images or plurality of images 14C

Predict metric(s) indicative of a cell state transition using statistical model 16

Identify control action 18

Provide results to user 20

Implement control action 22

Fig. 1

Provide cell populations in cell culture — 20

Acquire image(s) of cell populations using label-free imaging — 21

Acquire corresponding images using fluorescent imaging with marker of cell state transition process — 22

Obtain values of one or more process parameters — 23

Measure metric(s) indicative of a cell state transition — 24

— 25

Obtain algorithm(s) adapted to predict label-free image-derived feature(s)

Pre-process fluorescent images — 25A

Train machine learning model to predict fluorescent images from corresponding label-free images — 25B

Summarise predicted fluorescent images — 25C

— 26

Fit statistical model to predict metric(s) indicative of cell state transition based on label-free image derived features

Provide trained model(s) to user — 26

Fig. 2

Fig. 3

Fig. 4

Fig. 5A

Fig. 5B

Fig. 6A

Fig. 6B

Fig. 7A

Fig. 7B

Fig. 8

Fig. 9

Fig. 10

Fig. 11

Fig. 12

## EUROPEAN SEARCH REPORT

Application Number

EP 21 19 4437

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KE FAN ET AL: "A Machine Learning Assisted, Label-free, Non-invasive Approach for Somatic Reprogramming in Induced Pluripotent Stem Cell Colony Formation Detection and Prediction", SCIENTIFIC REPORTS, vol. 7, no. 1, 18 October 2017 (2017-10-18), XP055505954, DOI: 10.1038/s41598-017-13680-x | 1-10, 12-15 | INV. G06T7/00 G06V20/69 |
| Y | * abstract * * introductory section, last paragraph * * section "Results", "Quantitative detection of synchronized time-lapse data for iPSC selection prediction in human somatic cellular reprogramming" * * section "Methods" * * figures 3, 4 * | 11 | |
| | ----- | | |
| X | CHANG YUAN-HSIANG ET AL: "Human Induced Pluripotent Stem Cell Reprogramming Prediction in Microscopy Images using LSTM based RNN", 2019 41ST ANNUAL INTERNATIONAL CONFERENCE OF THE IEEE ENGINEERING IN MEDICINE AND BIOLOGY SOCIETY (EMBC), IEEE, 23 July 2019 (2019-07-23), pages 2416-2419, XP033625474, DOI: 10.1109/EMBC.2019.8857568 [retrieved on 2019-10-02] * abstract * * sections II.A, II.C * * figure 3 * | 1,15 | TECHNICAL FIELDS SEARCHED (IPC) G06T G06K G06V |
| | ----- | | |
| | -/-- | | |

The present search report has been drawn up for all claims

| Place of search | Date of completion of the search | Examiner |
|---|---|---|
| Munich | 8 February 2022 | Engels, Angela |

page 1 of 2

Europäisches
Patentamt

European
Patent Office

Office européen
des brevets

# EUROPEAN SEARCH REPORT

Application Number

EP 21 19 4437

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DAVID SMITH ET AL: "Automated image analysis with the potential for process quality control applications in stem cell maintenance and differentiation", BIOTECHNOLOGY PROGRESS, vol. 32, no. 1, 28 November 2015 (2015-11-28), pages 215-223, XP055626373, ISSN: 8756-7938, DOI: 10.1002/btpr.2199 * abstract * * section "Methods", "Image Acquisition" * * section "Methods", "Image Analysis" * * section "Discussion", first paragraph * ----- | 14 | |
| Y,D | WILLIAMS BIANCA ET AL: "Prediction of Human Induced Pluripotent Stem Cell Cardiac Differentiation Outcome by Multifactorial Process Modeling", FRONTIERS IN BIOENGINEERING AND BIOTECHNOLOGY, vol. 8, 23 July 2020 (2020-07-23), XP055888727, DOI: 10.3389/fbioe.2020.00851 * abstract * * section "MATERIALS AND METHODS", "Data Collection, Cell Sampling, Analysis, and Process Grouping Based on CMs Content" * * figures 1, 2 * ----- | 11 | TECHNICAL FIELDS SEARCHED (IPC) |

The present search report has been drawn up for all claims

| Place of search | Date of completion of the search | Examiner |
|---|---|---|
| Munich | 8 February 2022 | Engels, Angela |

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **WILLIAMS et al.** *Front. in Bioeng. and Biotech.,* July 2020, vol. 8
- **QIAN et al.** *Nature Communications,* 2021, vol. 12, 4580
- **DENG, J. ; DONG, W. ; SOCHER, R. ; LI, L.-J. ; LI, K. ; FEI-FEI, L.** Imagenet: A large-scale hierarchical image database. *2009 IEEE conference on computer vision and pattern recognition,* 2009, 248-255
- **CHEN, T. ; KORNBLITH, S. ; NOROUZI, M. ; HINTON, G.** A simple framework for contrastive learning of visual representations. *International conference on machine learning,* November 2020, 1597-1607
- **HE, K. ; FAN, H. ; WU, Y. ; XIE, S. ; GIRSHICK, R.** Momentum contrast for unsupervised visual representation learning. *Proceedings of the IEEE/CVF Conference on Computer Vision and Pattern Recognition,* 2020, 9729-9738
- **BREIMAN, LEO.** Random forests. *Machine learning,* 2001, vol. 45.1, 5-32
- **RUMELHART, DAVID E. ; GEOFFREY E. HINTON ; RONALD J. WILLIAMS.** Learning representations by back-propagating errors. *Nature,* 1986, vol. 323.6088, 533-536
- **KIEFER, JACK ; JACOB WOLFOWITZ.** Stochastic estimation of the maximum of a regression function. *The Annals of Mathematical Statistics,* 1952, vol. 23.3, 462-466
- Robust estimation of a location parameter. **HUBER, PETER J.** Breakthroughs in statistics. Springer, 1992, 492-518
- **CAMPOSTRINI et al.** *Nature Protocols,* 2021, vol. 16.4, 2213-2256
- U-net: Convolutional networks for biomedical image segmentation. **RONNEBERGER, OLAF ; PHILIPP FISCHER ; THOMAS BROX.** International Conference on Medical image computing and computer-assisted intervention. Springer, Cham, 2015
- **LEE, YOUNGWAN ; JONGYOUL PARK.** Centermask: Real-time anchor-free instance segmentation. *Proceedings of the IEEE/CVF conference on computer vision and pattern recognition,* 2020
- **REDMON, JOSEPH et al.** You only look once: Unified, real-time object detection. *Proceedings of the IEEE conference on computer vision and pattern recognition,* 2016
- **QIAO, SIYUAN ; LIANG-CHIEH CHEN ; ALAN YUILLE.** Detectors: Detecting objects with recursive feature pyramid and switchable atrous convolution. *Proceedings of the IEEE/CVF Conference on Computer Vision and Pattern Recognition,* 2021
- **J. TRYGG ; S. WOLD.** Orthogonal projections to latent structures (O-PLS). *Journal of Chemometrics: A Journal of the Chemometrics Society,* 2002, vol. 16.3, 119-128